(19) Europäisches Patentamt
European Patent Office
Office européen des brevets

(11) EP 3 151 041 B1

(12) **EUROPEAN PATENT SPECIFICATION**

(45) Date of publication and mention of the grant of the patent:
**20.02.2019 Bulletin 2019/08**

(51) Int Cl.:
***G02B 1/115*** *(2015.01)*

(21) Application number: **15188227.1**

(22) Date of filing: **02.10.2015**

(54) **AN OPTICAL FILM AND SPECTACLE LENS**

OPTISCHER FILM UND BRILLENGLAS

UN FILM OPTIQUE ET LENTILLE DE LUNETTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.04.2017 Bulletin 2017/14**

(73) Proprietor: **Tokai Optical Co., Ltd.**
**Okazaki-shi, Aichi 444-2192 (JP)**

(72) Inventors:
- **YOSHIDA, Takuro**
**Okazaki-shi, Aichi 444-2192 (JP)**
- **TAKAHASHI, Hirotoshi**
**Okazaki-shi, Aichi 444-2192 (JP)**

(74) Representative: **Prüfer & Partner mbB**
**Patentanwälte · Rechtsanwälte**
**Sohnckestraße 12**
**81479 München (DE)**

(56) References cited:
**EP-A1- 1 777 554**
**EP-A1- 2 275 843**
**EP-A1- 2 624 044**
**WO-A1-91/08106**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 151 041 B1

## Description

[Field of the Invention]

The present invention relates to optical products having antireflection films that reflect ultraviolet rays and blue light, and that prevent reflection of light, in a visible region, having wavelengths longer than a wavelength of the blue light, and to spectacle lenses as an example of the optical product.

[Background Art]

As antireflection films (optical multilayer films) that reflect one of blue light or ultraviolet rays and prevent reflection of light in the other visible regions, films described in Patent Literatures 1 and 2 have been known.

The antireflection film described in Patent Literature 1 is structured to have eight layers in which a layer closest to a transparent substrate is the first layer, the eighth layer is a low refractive index layer and has a film thickness that is greater than or equal to $0.22\lambda_0$ and not greater than $0.30\lambda_0$ ($\lambda_0$ represents a design wavelength, and is, for example, 520 nanometers (nm)), and the seventh layer is a high refractive index layer and has a film thickness that is greater than or equal to $0.16\lambda_0$ and not greater than $0.22\lambda_0$, so that ultraviolet rays are reflected.

In the multilayer film described in Patent Literature 2, an average reflectance is 2% to 10% for a wavelength range (blue light) of 400 nm to 500 nm, and the average reflectance of the multilayer film arranged on a convex surface of a plastic base material is made higher than the average reflectance of the multilayer film arranged on a concave surface.

Patent Literature 1: Japanese Patent No. 4171362
Patent Literature 2: Japanese Patent No. 5173076

Further, EP 2 624 044 A1 discloses an optical component according to the preamble of claim 1. Especially, the optical component disclosed in table 5 of EP 2 624 044 A1 comprises an optical multilayer film formed on a surface of a base and including six layers in which a low refractive index layer made of SiO2 and a high refractive index layer made of ZrO2 are alternately disposed where a first layer is closest to the base and a final layer is the low refractive index layer. The optical film thickness of the final layer is in a range between $0.33\lambda$ and $0.35\lambda$, the sum of thicknesses of the two final layers is in a range between $0.47\lambda$ and $0.495\lambda$, and the sum of thicknesses of the four first layers is in a range between $0.465\lambda$ and $0.50\lambda$.

Further, EP 2 275 843 A1 discloses an optical device according to the preamble of claim 2. Especially, the optical device disclosed in table 1 of EP 2 275 843 A1 comprises an optical multilayer film formed on a surface of a base and including seven layers in which a low refractive index layer made of SiO2 and a high refractive index layer made of Nb2O3 are alternately disposed where a first layer is closest to the base and a final layer is the low refractive index layer. The optical film thickness of the final layer is $0.2893\lambda$, the sum of thicknesses of the two final layers is $0.44\lambda$, and the sum of thicknesses of the five first layers is $0.5462\lambda$.

Furthermore, WO 91/08106 A1 discloses an antireflection layer system having at least eight layers, and EP 1 777 554 A1 discloses an electro-conductive antireflection coating having six layers wherein the low refractive index layers are made of MgF2 and the high refractive index layers are made of ITiO and the film thickness of the final layer is 90 nm.

[Summary of Invention]

[Technical Problem]

The antireflection film described in Patent Literature 1 has an improved ultraviolet shielding function while the antireflection film is not sufficient in blue light shielding.

In the multilayer film described in Patent Literature 2, the average reflectance for the wavelength range of 400 nm to 500 nm is 2% to 10%, and blue light is reflected to some degree while ultraviolet rays are not sufficiently reflected.

In recent years, since LED lighting, monitors having LED backlight, mobile devices, and the like have been widespread, it is suggested that eyes be protected from blue light (for example, light having a wavelength of 380 nm to 500 nm). The blue light is at the short wavelength in a wavelength region of visible light (visible region of, for example, 380 nm to 780 nm), and has relatively high energy, and therefore it is assumed that load on eyes is increased. Further, among visible light, the blue light is more likely to be scattered, is scattered also in eyes relatively well, and has glare which is relatively strongly felt. Therefore, it is suggested that blue light be cut off by, for example, a spectacle lens having some degree of reflectance for a wavelength region (blue light region) of blue light, thereby protecting eyes.

On the other hand, regarding ultraviolet rays, as described in [0005] of Patent Literature 1, a shielding film is used for optical components of a stepper using a liquid crystal projector, an ultraviolet lamp, and/or an excimer laser, while ultraviolet rays are not cut off by a spectacle lens or the like provided with an ultraviolet shielding film. Ultraviolet rays are cut off by ultraviolet absorber being kneaded in a plastic base in a plastic spectacle lens, and ultraviolet rays are not cut off at a glass lens. Further, even in a plastic spectacle lens, ultraviolet rays are not cut off at various films provided on the outer surface of the plastic base, and are transmitted through the films.

Ultraviolet rays have a wavelength that is shorter than blue light, and have higher energy, and it is assumed that load on eyes is further increased. Ultraviolet rays have a wavelength other than wavelengths in the visible region, and do not contribute to visibility. Therefore, it is preferable that ultraviolet rays are cut off as much as possible. On the other hand, blue light has a wavelength in the visible region and contributes to visibility. Therefore, blue light needs to be cut off to some degree while visibility is to be taken into consideration.

It is an object of the invention to provide an optical product and a spectacle lens that allow both blue light and ultraviolet rays to be cut off while visibility is made advantageous.

[Solution to Problem]

According to a first aspect of the invention, this object is achieved by an optical product comprising the features of claim 1. The optical multilayer film of this optical product includes six layers in which the low refractive index layers are made of silicon dioxide and the high refractive index layers are made of zirconium dioxide.

According to a second aspect of the invention, this object is achieved by an optical product comprising the features of claim 2. The optical multilayer film of this optical product includes seven layers in which the low refractive index layers are made of silicon dioxide and the high refractive index layers are made of titanium dioxide.

[Advantageous Effects of Invention]

According to the present invention, an effect of providing an optical product and a spectacle lens which allow both blue light and ultraviolet rays to be cut off while visibility is made advantageous, can be achieved.

[Brief Description of the Drawings]

FIG. 1 is a graph showing a distribution of reflectance according to Examples A1 to A3.
FIG. 2 is an enlarged view of FIG. 1.
FIG. 3 is a graph showing a distribution of reflectance according to Examples A4 to A6.
FIG. 4 is an enlarged view of FIG. 3.
FIG. 5 is a graph showing a distribution of reflectance according to Examples A7 to A9.
FIG. 6 is an enlarged view of FIG. 5.
FIG. 7 is a graph showing a distribution of reflectance according to Examples A10 to A12.
FIG. 8 is an enlarged view of FIG. 7.
FIG. 9 is a graph showing a distribution of reflectance according to Comparative examples A1 to A4.
FIG. 10 is an enlarged view of FIG. 9.
FIG. 11 is a graph showing a distribution of reflectance according to Examples B1 to B3.
FIG. 12 is an enlarged view of FIG. 11.
FIG. 13 is a graph showing a distribution of reflectance according to Examples B4 to B6.
FIG. 14 is an enlarged view of FIG. 13.
FIG. 15 is a graph showing a distribution of reflectance according to Examples B7 to B9.
FIG. 16 is an enlarged view of FIG. 15.
FIG. 17 is a graph showing a distribution of reflectance according to Examples B10 to B12.
FIG. 18 is an enlarged view of FIG. 17.
FIG. 19 is a graph showing a distribution of reflectance according to Examples B13 to B15.
FIG. 20 is an enlarged view of FIG. 19.
FIG. 21 is a graph showing a distribution of reflectance according to Comparative examples B1 to B4
FIG. 22 is an enlarged view of FIG. 21.

[Description of Embodiments]

Embodiments of the present invention will be described below.

An optical product is a convex lens, and has a convex surface (front surface) and a concave surface (rear surface). Alternatively, the optical product is a flat lens or a concave lens, and has a front surface and a rear surface. The optical product includes a base having a front surface and a rear surface, and an optical multilayer film formed on at least the front surface of the base.

A material of the base may be any material such as glass or plastic. Plastic is preferably used.

Examples of the material of the base include a polyurethane resin, an episulfide resin, a polycarbonate resin, an acrylic resin, a polyether sulfone resin, a poly(4-methylpentene-1)resin, and a diethylene glycol bis(allyl carbonate) resin.

Typical examples of the optical product include spectacle lenses such as spectacle plastic lenses or spectacle glass lenses. Other examples of the optical product include camera lenses, projector lenses, binocular lenses, telescope lenses, and various filters. In the case of a spectacle lens, the base is a spectacle lens base.

The optical multilayer film may be formed directly on the front surface of the base, or may be formed, via a single or plural intermediate film such as a hard coating layer, on the front surface of the base. The hard coating layer is formed of, for example, an organosiloxane or other organosilicon compound, or an acrylic compound. A primer layer may be formed below the hard coating layer. The primer layer is formed of at least one of, for example, a polyurethane-based resin, an acrylic resin, a methacrylic resin, and an organosilicon resin.

The optical multilayer film formed on the base has, in total, six layers or seven layers in which a high refractive index material and a low refractive index material are alternately layered. The high refractive index material is zirconium dioxide ($ZrO_2$) or titanium oxide ($TiO_2$), and the low refractive index material is silicon dioxide ($SiO_2$).

In the optical multilayer film, a first layer is disposed closest to the base, and the low refractive index material is disposed in a final layer (outermost layer). A single or plural outer films such as a water repellent film may be further formed outward of the optical multilayer film.

The optical multilayer film is formed by, for example, physical vapor deposition such as a vacuum deposition method or a sputtering method. In the vacuum deposition method, various gases such as inert gas may be supplied at the deposition, conditions (an amount to be supplied, pressure at film forming, or the like) for supplying the gases may be controlled, an ion-assisted method in which various ions are introduced at a predetermined acceleration voltage or acceleration current when the film is formed may be implemented, or plasma treatment may be performed when the film is formed.

The final layer (low refractive index layer) of the optical multilayer film is produced such that an optical film thickness is greater than or equal to 0.295λ and not greater than 0.415λ (λ represents a design wavelength, and is, for example, 500 nm). That is, when the optical film thickness of the final layer is represented as M,

$$0.295\lambda \leq M \leq 0.415\lambda$$

is satisfied.

Further, a sum of the optical film thickness of the final layer and an optical film thickness of a layer (high refractive index layer) adjacent to the final layer is set to be greater than or equal to 0.460λ and not greater than 0.560λ. That is, when the optical film thickness of the layer adjacent to the final layer is represented as N,

$$0.460\lambda \leq M+N \leq 0.560\lambda$$

is satisfied.

The optical product having such an optical multilayer film on one surface or both surfaces, has the following characteristics.

That is, an average reflectance (hereinafter, referred to as an "ultraviolet average reflectance") for light in a range of wavelengths that are greater than or equal to 280 nm and not greater than 380 nm, is greater than or equal to 50% and not greater than 86%.

Further, an average reflectance (hereinafter, referred to as a "blue light average reflectance") for light in a range of wavelengths that are greater than or equal to 380 nm and not greater than 500 nm, is greater than or equal to 15% and not greater than 26%.

Furthermore, an average reflectance (hereinafter, referred to as a "central-section-in-visible-region average reflectance") for light in a range of wavelengths that are greater than or equal to 500 nm and not greater than 700 nm, is less than or equal to 1.0%.

In addition, a luminous reflectance (D65 light source, viewing angle of 2 degrees) is less than or equal to 1.0%.

When the ultraviolet average reflectance is greater than or equal to 50% and not greater than 86%, and the blue light average reflectance is greater than or equal to 15% and not greater than 26%, both blue light and ultraviolet rays can be cut off.

Further, when the central-section-in-visible-region average reflectance is less than or equal to 1.0% or the luminous reflectance is less than or equal to 1.0%, an optical multilayer film (optical product) has a reflection prevention function so that excellent visibility can be obtained.

Further, when the average reflectance for light in a range of wavelengths that are greater than or equal to 380 nm and not greater than 500 nm, is greater than or equal to 15% and not greater than 26%, since blue light is not cut off beyond necessity (cut off to an intermediate degree), visibility can be advantageously assured.

On the other hand, when the optical film thickness M of the final layer is less than 0.295λ, the central-section-in-visible-region average reflectance is greater than 1.0%, and excellent visibility cannot be assured.

Further, when M is greater than 0.415λ, the central-section-in-visible-region average reflectance is greater than 1.0% or the luminous reflectance is greater than 1.0%, and excellent visibility cannot be assured.

Furthermore, when a sum M+N of the optical film thickness M of the final layer and the optical film thickness N of the layer (a layer that is one layer inward of the final layer) adjacent to the final layer is less than 0.460λ, the central-section-in-visible-region average reflectance is greater than 1.0% or the luminous reflectance is greater than 1.0%, and excellent visibility cannot be assured.

Moreover, when M+N is greater than 0.560λ, the ultraviolet average reflectance is less than 50%, and the central-section-in-visible-region average reflectance is greater than 1.0% or the luminous reflectance is greater than 1.0%. Therefore, an excellent ultraviolet shielding function or excellent visibility cannot be assured.

When film thicknesses of the layers other than the final layer and the layer adjacent thereto are designed as appropriate in a state where various conditions for the optical multilayer film of the present invention are satisfied, an optical product that allows both blue light and ultraviolet rays to be cut off with excellent visibility (reflection prevention performance), can be provided.

Further, adjustment is performed such that a color of light reflected by the optical multilayer film formed on the front surface advantageously matches a color of light reflected by the front surface of the base or the other films. Thus, when the lens or a person (for example, a wearer of the spectacle lens) having the lens is seen from the outside, colors of the light reflected by the lens are harmonized, so that a good appearance is provided without flicker. Further, flicker in color of light observed through the lens is reduced also for the person having the lens, and seeing of light through the lens is facilitated. The optical multilayer film may be formed on the concave surface (rear surface) in the same manner as for the convex surface (front surface) such that equivalent films are formed on the front and rear surfaces.

[Examples]

Next, various examples and the like of the optical multilayer film (optical product) will be described.

For two film types (film type A, B) described below, a plurality of examples according to the present invention and a plurality of comparative examples that do not belong to the present invention were made.

In the film type A, the film has, in total, six layers in which the low refractive index material is $SiO_2$, the high refractive index material is $ZrO_2$, and the first layer closest to the base is formed of $ZrO_2$. The final layer is formed of $SiO_2$, and the layer adjacent thereto is formed of $ZrO_2$.

In the film type B, the film has, in total, seven layers in which the low refractive index material is $SiO_2$, the high refractive index material is $TiO_2$, and the first layer closest to the base is formed of $SiO_2$. The final layer is formed of $SiO_2$, and the layer adjacent thereto is formed of $TiO_2$.

The optical multilayer films of the film types A and B (all the examples and all the comparative examples) are each formed on both surfaces of each of lens bases having the same structure. The lens base is formed of a thiourethane resin, and the refractive index is 1.60, the Abbe number is 42, and the power is -0.00 (substrate in which the convex surface and the concave surface have the same curve).

Table 1 indicated below indicates the optical film thicknesses (L1 to L6) of the respective layers, and a sum (L5+L6 corresponding to M+N as described above) of the optical film thicknesses of the final layer and the layer adjacent thereto in each film according to Examples A1 to A6 for the film type A. Table 2 indicates the optical film thicknesses of the respective layers and the like according to Examples A7 to A12 for the film type A. Table 3 indicates the optical film thicknesses of the respective layers and the like according to Comparative examples A1 to A4 for the film type A.

Further, FIG. 1 is a graph showing a distribution of reflectance in a range from the ultraviolet region to the visible region according to Examples A1 to A3. FIG. 2 is an enlarged view (a graph in which the vertical axis represents the reflectance of 0% to 5%, and the horizontal axis represents a wavelength starting from 380 nm) of FIG. 1. FIG. 3 is a graph showing a distribution of reflectance according to Examples A4 to A6, and FIG. 4 is an enlarged view of FIG. 3. FIG. 5 is a graph showing a distribution of reflectance according to Examples A7 to A9, and FIG. 6 is an enlarged view of FIG. 5. FIG. 7 is a graph showing a distribution of reflectance according to Examples A10 to A12, and FIG. 8 is an enlarged view of FIG. 7. Further, FIG. 9 is a graph showing a distribution of reflectance according to Comparative examples A1 to A4, and FIG. 10 is an enlarged view of FIG. 9.

[Table 1]

| Film structure | | | Example A1 | Example A2 | Example A3 | Example A4 | Example A5 | Example A6 |
|---|---|---|---|---|---|---|---|---|
| Layer | Material | Refractive index | Optical film thickness (×λ) | | | | | |
| L1 | ZrO2 | 2.06 | 0.117 | 0.116 | 0.112 | 0.116 | 0.111 | 0.109 |
| L2 | SiO2 | 1.48 | 0.171 | 0.172 | 0.172 | 0.170 | 0.173 | 0.177 |
| L3 | Zr02 | 2.06 | 0.181 | 0.178 | 0.173 | 0.171 | 0.162 | 0.154 |
| L4 | SiO2 | 1.48 | 0.128 | 0.137 | 0.144 | 0.154 | 0.167 | 0.180 |
| L5 | ZrO2 | 2.06 | 0.215 | 0.202 | 0.189 | 0.177 | 0.165 | 0.152 |
| L6 | SiO2 | 1.48 | 0.330 | 0.334 | 0.357 | 0.362 | 0.372 | 0.379 |
| L5+L6 | | | 0.544 | 0.536 | 0.547 | 0.539 | 0.536 | 0.531 |
| | | | Average reflectance [%] | | | | | |
| 280 to 380 nm | | | 51 | 53 | 53 | 54 | 54 | 53 |
| 380 to 500 nm | | | 15 | 15 | 15 | 15 | 15 | 15 |
| 500 to 700 nm | | | 0.6 | 0.6 | 0.7 | 0.8 | 0.8 | 0.9 |
| Luminous reflectance [%] | | | 0.5 | 0.5 | 0.9 | 0.9 | 1.0 | 1.0 |
| YI value | | | 5.1 | 5.0 | 5.6 | 5.4 | 5.6 | 5.6 |

[Table 2]

| Film structure | | | Example A7 | Example A8 | Example A9 | Example A10 | Example A11 | Example A12 |
|---|---|---|---|---|---|---|---|---|
| Layer | Material | Refractive index | Optical film thickness (×λ) | | | | | |
| L1 | ZrO2 | 2.06 | 0.109 | 0.117 | 0.162 | 0.110 | 0.134 | 0.098 |
| L2 | SiO2 | 1.48 | 0.180 | 0.171 | 0.145 | 0.188 | 0.160 | 0.209 |
| L3 | ZrO2 | 2.06 | 0.148 | 0.181 | 0.172 | 0.167 | 0.187 | 0.125 |
| L4 | SiO2 | 1.48 | 0.199 | 0.128 | 0.195 | 0.156 | 0.156 | 0.201 |
| L5 | ZrO2 | 2.06 | 0.140 | 0.215 | 0.154 | 0.185 | 0.185 | 0.173 |
| L6 | SiO2 | 1.48 | 0.374 | 0.330 | 0.377 | 0.326 | 0.370 | 0.326 |
| L5+L6 | | | 0.514 | 0.544 | 0.531 | 0.511 | 0.556 | 0.499 |
| | | | Average reflectance [%] | | | | | |
| 280 to 380 nm | | | 52 | 51 | 50 | 51 | 50 | 50 |
| 380 to 500 nm | | | 15 | 15 | 21 | 15 | 21 | 15 |
| 500 to 700 nm | | | 0.9 | 0.6 | 0.8 | 1.0 | 0.7 | 1.0 |
| Luminous reflectance [%] | | | 0.9 | 0.4 | 0.9 | 1.0 | 1.0 | 0.6 |
| YI value | | | 5.5 | 5.1 | 9.3 | 5.6 | 9.7 | 5.9 |

[Table 3]

| Film structure | | | Comparative example A1 | Comparative example A2 | Comparative example A3 | Comparative example A4 |
|---|---|---|---|---|---|---|
| Layer | Material | Refractive index | Optical film thickness (×λ) | | | |
| L1 | ZrO2 | 2.06 | 0.149 | 0.179 | 0.137 | 0.152 |
| L2 | SiO2 | 1.48 | 0.174 | 0.135 | 0.175 | 0.159 |
| L3 | ZrO2 | 2.06 | 0.156 | 0.185 | 0.147 | 0.178 |
| L4 | SiO2 | 1.48 | 0.159 | 0.195 | 0.229 | 0.147 |
| L5 | ZrO2 | 2.06 | 0.227 | 0.128 | 0.128 | 0.206 |
| L6 | SiO2 | 1.48 | 0.287 | 0.421 | 0.326 | 0.370 |
| L5+L6 | | | 0.515 | 0.549 | 0.454 | 0.576 |
| | | | Average reflectance [%] | | | |
| 280 to 380 nm | | | 50 | 50 | 51 | 46 |
| 380 to 500 nm | | | 16 | 22 | 15 | 23 |
| 500 to 700 nm | | | 1.8 | 1.6 | 2.3 | 1.4 |
| Luminous reflectance [%] | | | 0.8 | 2.4 | 2.0 | 2.2 |
| YI value | | | 6.9 | 9.1 | 6.2 | 10.1 |

Table 4 indicated below indicates the optical film thicknesses (L1 to L7) of the respective layers, and a sum (L6+L7 corresponding to M+N as described above) of the optical film thicknesses of the final layer and the layer adjacent thereto in each film according to Examples B1 to B5 for the film type B. Table 5 indicates the optical film thicknesses of the respective layers and the like according to Examples B6 to B10 for the film type B. Table 6 indicates the optical film thicknesses of the respective layers and the like according to Examples B11 to B15 for the film type B. Table 7 indicates the optical film thicknesses of the respective layers and the like according to Comparative Examples B1 to B4 for the film type B.

Further, FIG. 11 is a graph showing a distribution of reflectance according to Examples B1 to B3, and FIG. 12 is an enlarged view of FIG. 11. FIG. 13 is a graph showing a distribution of reflectance according to Examples B4 to B6, and FIG. 14 is an enlarged view of FIG. 13. FIG. 15 is a graph showing a distribution of reflectance according to Examples B7 to B9, and FIG. 16 is an enlarged view of FIG. 15. FIG. 17 is a graph showing a distribution of reflectance according to Examples B10 to B12, and FIG. 18 is an enlarged view of FIG. 17. FIG. 19 is a graph showing a distribution of reflectance according to Examples B13 to B15, and FIG. 20 is an enlarged view of FIG. 19. FIG. 21 a graph showing a distribution of reflectance according to Comparative examples B1 to B4, and FIG. 22 is an enlarged view of FIG. 21.

[Table 4]

| Film structure | | | Example B1 | Example B2 | Example B3 | Example B4 | Example B5 |
|---|---|---|---|---|---|---|---|
| Layer | Material | Refractive index | Optical film thickness (×λ) | | | | |
| L1 | SiO2 | 1.48 | 0.103 | 0.059 | 0.133 | 0.210 | 0.132 |
| L2 | TiO2 | 2.42 | 0.086 | 0.093 | 0.085 | 0.048 | 0.073 |
| L3 | SiO2 | 1.48 | 0.182 | 0.173 | 0.189 | 0.236 | 0.210 |
| L4 | TiO2 | 2.42 | 0.151 | 0.162 | 0.158 | 0.138 | 0.148 |
| L5 | SiO2 | 1.48 | 0.143 | 0.134 | 0.134 | 0.140 | 0.138 |
| L6 | TiO2 | 2.42 | 0.147 | 0.153 | 0.152 | 0.149 | 0.148 |
| L7 | SiO2 | 1.48 | 0.357 | 0.348 | 0.346 | 0.350 | 0.347 |
| L6+L7 | | | 0.504 | 0.501 | 0.498 | 0.500 | 0.495 |

(continued)

| | Average reflectance [%] | | | | |
|---|---|---|---|---|---|
| 280 to 380 nm | 86 | 85 | 85 | 81 | 85 |
| 380 to 500 nm | 18 | 18 | 18 | 17 | 17 |
| 500 to 700 nm | 0.6 | 0.6 | 0.6 | 0.6 | 0.6 |
| Luminous reflectance [%] | 0.5 | 0.6 | 0.5 | 0.6 | 0.7 |
| YI value | 4.7 | 4.8 | 4.5 | 4.7 | 4.5 |

[Table 5]

| Film structure | | | Example B6 | Example B7 | Example B8 | Example B9 | Example B10 | |
|---|---|---|---|---|---|---|---|---|
| Layer | Material | Refractive index | Optical film thickness (×λ) | | | | | |
| L1 | SiO2 | 1.48 | 0.116 | 0.030 | 0.133 | 0.053 | 0.169 | |
| L2 | TiO2 | 2.42 | 0.097 | 0.100 | 0.092 | 0.119 | 0.082 | |
| L3 | SiO2 | 1.48 | 0.157 | 0.146 | 0.178 | 0.119 | 0.184 | |
| L4 | TiO2 | 2.42 | 0.186 | 0.187 | 0.170 | 0.219 | 0.173 | |
| L5 | SiO2 | 1.48 | 0.115 | 0.118 | 0.119 | 0.108 | 0.107 | |
| L6 | TiO2 | 2.42 | 0.164 | 0.161 | 0.170 | 0.162 | 0.187 | |
| L7 | SiO2 | 1.48 | 0.343 | 0.345 | 0.334 | 0.348 | 0.326 | |
| L6+L7 | | | 0.508 | 0.506 | 0.504 | 0.510 | 0.513 | |
| Average reflectance [%] | | | | | | | | |
| 280 to 380 nm | | | 80 | 79 | 82 | 74 | 80 | |
| 380 to 500 nm | | | 17 | 17 | 18 | 17 | 17 | |
| 500 to 700 nm | | | 0.6 | 0.6 | 0.6 | 0.9 | 0.5 | |
| Luminous reflectance [%] | | | 0.4 | 0.5 | 0.4 | 0.5 | 0.4 | |
| YI value | | | 4.1 | 4.4 | 4.5 | 4.2 | 4.4 | |

[Table 6]

| Film structure | | | Example B11 | Example B12 | Example B13 | Example B14 | Example B15 |
|---|---|---|---|---|---|---|---|
| Layer | Material | Refractive index | Optical film thickness (×λ) | | | | |
| L1 | SiO2 | 1.48 | 0.182 | 0.175 | 0.110 | 0.064 | 0.061 |
| L2 | TiO2 | 2.42 | 0.089 | 0.078 | 0.091 | 0.078 | 0.097 |
| L3 | SiO2 | 1.48 | 0.165 | 0.179 | 0.206 | 0.214 | 0.171 |
| L4 | TiO2 | 2.42 | 0.200 | 0.206 | 0.110 | 0.118 | 0.166 |
| L5 | SiO2 | 1.48 | 0.072 | 0.056 | 0.234 | 0.188 | 0.153 |
| L6 | TiO2 | 2.42 | 0.242 | 0.262 | 0.092 | 0.121 | 0.145 |
| L7 | SiO2 | 1.48 | 0.303 | 0.296 | 0.415 | 0.341 | 0.385 |
| L6+L7 | | | 0.544 | 0.559 | 0.507 | 0.462 | 0.530 |
| | | | Average reflectance [%] | | | | |
| 280 to 380 nm | | | 74 | 69 | 82 | 86 | 82 |

(continued)

| | | | | | |
|---|---|---|---|---|---|
| | Average reflectance [%] | | | | |
| 380 to 500 nm | 17 | 18 | 26 | 18 | 26 |
| 500 to 700 nm | 0.7 | 0.4 | 1.0 | 1.0 | 0.7 |
| Luminous reflectance [%] | 0.5 | 0.4 | 1.0 | 0.7 | 0.9 |
| YI value | 4.5 | 5.1 | 10.0 | 5.2 | 9.7 |

[Table 7]

| Film structure | | | Comparative example B1 | Comparative example B2 | Comparative example B3 | Comparative example B4 |
|---|---|---|---|---|---|---|
| Layer | Material | Refractive index | Optical film thickness (×λ) | | | |
| L1 | SiO2 | 1.48 | 0.172 | 0.101 | 0.115 | 0.100 |
| L2 | TiO2 | 2.42 | 0.095 | 0.092 | 0.087 | 0.085 |
| L3 | SiO2 | 1.48 | 0.172 | 0.207 | 0.208 | 0.165 |
| L4 | TiO2 | 2.42 | 0.188 | 0.104 | 0.110 | 0.207 |
| L5 | SiO2 | 1.48 | 0.064 | 0.251 | 0.221 | 0.101 |
| L6 | TiO2 | 2.42 | 0.276 | 0.081 | 0.097 | 0.179 |
| L7 | SiO2 | 1.48 | 0.282 | 0.430 | 0.341 | 0.385 |
| L6+L7 | | | 0.557 | 0.511 | 0.437 | 0.564 |
| | | | Average reflectance [%] | | | |
| 280 to 380 nm | | | 74 | 78 | 85 | 71 |
| 380 to 500 nm | | | 18 | 26 | 17 | 26 |
| 500 to 700 nm | | | 1.4 | 1.2 | 2.0 | 1.1 |
| Luminous reflectance [%] | | | 0.9 | 1.2 | 1.2 | 1.6 |
| YI value | | | 4.2 | 10.6 | 4.4 | 9.9 |

Each table indicates the average reflectance for light having wavelengths that are greater than or equal to 280 nm and not greater than 380 nm, the average reflectance for light having wavelengths that are greater than or equal to 380 nm and not greater than 500 nm, the average reflectance for light having wavelengths that are greater than or equal to 500 nm and not greater than 700 nm, the luminous reflectance (D65 light source, viewing angle of 2 degrees); and the YI value.

The YI value is represented, according to the following equation, by using tri-stimulus values X, Y, Z of a test sample in the standard illuminant in the XYZ color system.

$$YI = 100\,(1.2769X - 1.059Z)/Y$$

When the YI value is minus, the tint becomes bluish. When the YI value is plus, the tint becomes yellowish or reddish. The XYZ color system is adopted as a standard color system by the CIE (International Commission on Illumination), and is a system based on red, green, and blue that are the three primary colors of light, or additive mixture thereof. A colorimeter for obtaining the stimulus values X, Y, Z in the XYZ color system is publicly known. Multiplication, of spectral energy of light to be measured, by a color-matching function for each of the stimulus values X, Y, Z for each wavelength, is performed and the results of the multiplication over all the wavelengths in a visible region are accumulated, to obtain the stimulus values X, Y, Z.

In Comparative example A1, the optical film thickness (L6) of the final layer is 0.287λ, and is slightly less than the lower limit of $0.295\lambda \leq M \leq 0.415\lambda$. Therefore, the central-section-in-visible-region average reflectance is 1.8%, and extremely excellent visibility of visible light (visibility is excellent when the central-section-in-visible-region average reflectance is less than or equal to 1%) cannot be assured.

In Comparative example A2, the optical film thickness (L6) of the final layer is $0.421\lambda$, and is slightly greater than the upper limit of $0.295\lambda \leq M \leq 0.415\lambda$. Therefore, the central-section-in-visible-region average reflectance is 1.6% and the luminous reflectance is 2.4%, and extremely excellent visibility of visible light (visibility is excellent when the central-section-in-visible-region average reflectance and the luminous reflectance are each less than or equal to 1%) cannot be assured.

In Comparative example A3, a sum (L5+L6) of the optical film thicknesses of the final layer and the layer adjacent thereto is $0.454\lambda$, and is slightly less than the lower limit of $0.460\lambda$, $\leq M+N \leq 0.560\lambda$. Therefore, the central-section-in-visible-region average reflectance is 2.3% and the luminous reflectance is 2.0%, and extremely excellent visibility of visible light cannot be assured.

In Comparative example A4, a sum (L5+L6) of the optical film thicknesses of the final layer and the layer adjacent thereto is $0.576\lambda$, and is slightly greater than the upper limit of $0.460\lambda \leq M+N \leq 0.560\lambda$. Therefore, the ultraviolet average reflectance is 46%, the central-section-in-visible-region average reflectance is 1.4%, and the luminous reflectance is 2.2%. Therefore, an appropriate ultraviolet shielding function (the function is appropriate when the ultraviolet average reflectance is greater than or equal to 50% and not greater than 86%) and extremely excellent visibility of visible light (the visibility is excellent when the central-section-in-visible-region average reflectance and the luminous reflectance are each less than or equal to 1%) cannot be assured. In Comparative example A4, the YI value is 10.1, and yellowish or reddish tint is relatively strong in the optical multiplayer film. Thus, excellent visibility or advantageous outer appearance (visibility is excellent or outer appearance is advantageous when the YI value is less than or equal to 10) cannot be assured. When the yellowish tint or reddish tint is strong, the tint is yellowish (reddish) in the field of view, and a portion of the spectacle around eyes becomes yellowish or reddish, and an outer appearance becomes unique. Therefore, such an outer appearance tends to be avoided.

On the other hand, in Examples A1 to A12, conditions of $0.326\lambda \leq M \leq 0.379\lambda$ and $0.499\lambda \leq M+N \leq 0.556\lambda$ are both satisfied. Therefore, the ultraviolet average reflectance is greater than or equal to 50% and not greater than 54%, the blue light average reflectance is greater than or equal to 15% and not greater than 21%, and the central-section-in-visible-region average reflectance is less than or equal to 1.0%. Further, the luminous reflectance is less than or equal to 1.0%. Furthermore, the YI value is less than or equal to 10.0.

Therefore, while both blue light and ultraviolet rays are cut off, extremely advantageous visibility can be assured, and an advantageous outer appearance can be also assured. Since blue light and ultraviolet rays are cut off, eyes can be protected in the case of spectacles. Further, even when the optical multilayer film according to Examples A1 to A12 is provided in the optical product that contains ultraviolet absorber in a base, ultraviolet rays can be cut off already in the optical multilayer film. Therefore, the base and an intermediate film such as a hard coating film can be protected from ultraviolet rays. Further, as excellent visibility in the visible region can be simultaneously assured, the present invention is suitable for spectacles, camera filters, display films, and the like.

In Comparative example B1, the optical film thickness (L7) of the final layer is $0.282\lambda$, and is slightly less than the lower limit of $0.295\lambda \leq M \leq 0.415\lambda$. Therefore, the central-section-in-visible-region average reflectance is 1.4%, and extremely excellent visibility of visible light cannot be assured.

In Comparative example B2, the optical film thickness (L7) of the final layer is $0.430\lambda$, and is slightly greater than the upper limit of $0.295\lambda \leq M \leq 0.415\lambda$. Therefore, the central-section-in-visible-region average reflectance is 1.2% and the luminous reflectance is 1.2%, and extremely excellent visibility of visible light cannot be assured. In Comparative example B2, the YI value is 10.6, and the yellowish or reddish tint is strong.

In Comparative example B3, a sum (L6+L7) of the optical film thicknesses of the final layer and the layer adjacent thereto is $0.437\lambda$, and is slightly less than the lower limit of $0.460\lambda \leq M+N \leq 0.560\lambda$. Therefore, the central--section-in-visible-region average reflectance is 2.0% and the luminous reflectance is 1.2%, and extremely excellent visibility of visible light cannot be assured.

In Comparative example B4, a sum (L6+L7) of the optical film thicknesses of the final layer and the layer adjacent thereto is $0.564\lambda$, and is slightly greater than the upper limit of $0.460\lambda \leq M+N \leq 0.560\lambda$. Therefore, the central-section-in-visible-region average reflectance is 1.1% and the luminous reflectance is 1.6%, and extremely excellent visibility of visible light cannot be assured.

On the other hand, in Examples B1 to B15, conditions of $0.296\lambda \leq M \leq 0.415\lambda$ and $0.462\lambda \leq M+N \leq 0.559\lambda$ are both satisfied. Therefore, the ultraviolet average reflectance is greater than or equal to 69% and not greater than 86%, the blue light average reflectance is greater than or equal to 17% and not greater than 26%, and the central-section-in-visible-region average reflectance is less than or equal to 1.0%. Further, the luminous reflectance is less than or equal to 1.0%. Furthermore, the YI value is less than or equal to 10.0.

Therefore, while both blue light and ultraviolet rays are cut off, extremely advantageous visibility can be assured, and an advantageous outer appearance can be also assured.

**Claims**

1. An optical product comprising:

a base; and
an optical multilayer film formed on a surface of the base,
wherein the optical multilayer film consists of six layers (L1 to L6) in which a low refractive index layer (L2, L4, L6) made of silicon dioxide and a high refractive index layer (L1, L3, 15) made of zirconium dioxide are alternately disposed where a first layer (L1) is closest to the base and a final layer (L6) is the low refractive index layer,
wherein the final layer (L6) has an optical film thickness M which satisfies the following condition when a design wavelength $\lambda$ = 500 nm is satisfied:

$$0.326\lambda \leq M \leq 0.379\lambda$$

**characterized in that**
when a layer (L5) adjacent to the final layer (L6) has an optical film thickness N, a sum M+N of the optical film thickness M and the optical film thickness N satisfies the following condition, when a design wavelength $\lambda$ = 500 nm is satisfied:

$$0.499\lambda \leq M+N \leq 0.556\lambda$$

a sum of the optical film thickness of the first four layers (L1, L2, L3, L4) is in a range between 0.597$\lambda$ and 0.674$\lambda$, when a design wavelength $\lambda$ = 500 nm is satisfied, and
in the optical multilayer film, an average reflectance for light in a range of wavelengths that are greater than or equal to 280 nm and not greater than 380 nm, is greater than or equal to 50% and not greater than 54%, and an average reflectance for light in a range of wavelengths that are greater than or equal to 380 nm and not greater than 500 nm, is greater than or equal to 15% and not greater than 21%, so that both blue light and ultraviolet rays can be cut off while visibility can be assured.

2. An optical product comprising:

a base; and
an optical multilayer film formed on a surface of the base,
wherein the optical multilayer film consists of seven layers (L1 to L7) in which a low refractive index layer (L1, L3, L5, L7) made of silicon dioxide and a high refractive index layer (L2, L4, L6) are alternately disposed where a first layer (L1) is closest to the base and a final layer (L7) is the low refractive index layer,
**characterized in that**
the high refractive index layers (L2, L4, L6) are made of titanium oxide,
when the final layer (L7) has an optical film thickness M and a layer (L6) adjacent to the final layer (L7) has an optical film thickness N, the following conditions are satisfied, when a design wavelength $\lambda$ = 500 nm is satisfied:

$$0.296\lambda \leq M \leq 0.415\lambda$$

$$0.462\lambda \leq M+N \leq 0.559\lambda$$

a sum of the optical film thickness of the first five layers (L1, L2, L3, L4, L5) is in a range between 0.581$\lambda$ and 0.772$\lambda$, when a design wavelength $\lambda$ = 500 nm is satisfied, and
in the optical multilayer film, an average reflectance for light in a range of wavelengths that are greater than or equal to 280 nm and not greater than 380 nm, is greater than or equal to 69% and not greater than 86%, and an average reflectance for light in a range of wavelengths that are greater than or equal to 380 nm and not greater than 500 nm, is greater than or equal to 17% and not greater than 26%, so that both blue light and ultraviolet rays can be cut off while visibility can be assured.

3. The optical product according to claim 1 or 2, wherein, in the optical multilayer film, an average reflectance for light in a range of wavelengths that are greater than or equal to 500 nm and not greater than 700 nm, is less than or equal to 1.0%.

4. The optical product according to any one of claims 1 to 3, wherein a luminous reflectance in the optical multilayer film is less than or equal to 1.0%, for a D65 light source and a viewing angle of 2 degrees.

5. A spectacle lens comprising:

the optical product according to any one of claims 1 to 4, wherein the base is a spectacle lens base.

**Patentansprüche**

1. Optisches Produkt, aufweisend:

eine Basis; und
eine optische Mehrlagenschicht, die auf einer Oberfläche der Basis gebildet ist, wobei
die optische Mehrlagenschicht aus sechs Lagen besteht (L1 bis L6), in denen abwechselnd eine Lage mit einem niedrigen Brechungsindex (L2, L4, L6) aus Siliziumdioxid und eine Lage mit einem hohen Brechungsindex (L1, L3, L5) aus Zirconiumdioxid angeordnet sind, wobei eine erste Lage (L1) am nächsten zur Basis liegt und eine Endlage (L6) die Lage mit niedrigem Brechungsindex ist,
wobei die Endlage (L6) eine optische Schichtdicke M aufweist, die die folgende Bedingung erfüllt, wenn eine Bemessungswellenlänge von $\lambda$=500nm erfüllt ist:

$$0{,}326\lambda \leq M \leq 0{,}379\lambda$$

**dadurch gekennzeichnet, dass**
wenn eine an die Endlage (L6) angrenzende Lage (L5) eine optische Schichtdicke N hat, eine Summe M+N der optischen Schichtdicke M und der optischen Schichtdicke N die folgende Bedingung erfüllt, wenn eine Bemessungswellenlänge A=500nm erfüllt ist:

$$0{,}499\lambda \leq M+N \leq 0{,}556\lambda,$$

eine Summe der optischen Schichtdicke der ersten vier Lagen (L1, L2, L3, L4) in einem Bereich zwischen 0,597$\lambda$ und 0,674$\lambda$ ist, wenn eine Bemessungswellenlänge $\lambda$=500nm erfüllt ist, und
in der optischen Mehrlagenschicht in einem Wellenlängenbereich von größer als oder gleich 280nm und nicht größer als 380nm ein durchschnittlicher Lichtreflexionsgrad größer als oder gleich 50% und nicht größer als 54% ist und in einem Wellenlängenbereich von größer als oder gleich 380nm und nicht größer als 500nm ein durchschnittlicher Lichtreflexionsgrad größer als oder gleich 15% und nicht größer als 21% ist, sodass sowohl blaues Licht als auch ultraviolette Strahlen abgeschnitten werden können, während eine Sicht gewährleistet werden kann.

2. Optisches Produkt, aufweisend:

eine Basis; und
eine optische Mehrlagenschicht, die auf einer Oberfläche der Basis gebildet ist, wobei
die optische Mehrlagenschicht aus sieben Lagen besteht (L1 bis L7), in denen abwechselnd eine Lage mit einem niedrigem Brechungsindex (L1, L3, L5, L7) aus Siliziumdioxid und eine Lage mit einem hohen Brechungsindex (L2, L4, L6) angeordnet sind, wobei eine erste Lage (L1) am nächsten zur Basis liegt und eine Endlage (L7) die Lage mit niedrigem Brechungsindex ist,
**dadurch gekennzeichnet, dass**

die Lagen mit hohem Brechungsindex (L2, L4, L6) aus Titanoxid sind,
wenn die Endlage (L7) eine optische Schichtdicke M und eine an die Endlage (L7) angrenzende Lage (L6) eine optische Schichtdicke N hat, die folgenden Bedingungen erfüllt sind, wenn eine Bemessungswellenlänge $\lambda$=500nm erfüllt ist:

$$0{,}296\lambda \leq M \leq 0{,}415\lambda,$$

$$0{,}462\lambda \leq M+N \leq 0{,}559\lambda,$$

eine Summe der optischen Schichtdicke der ersten fünf Lagen (L1, L2, L3, L4, L5) in einem Bereich zwischen 0,581$\lambda$ und 0,772$\lambda$ ist, wenn eine Bemessungswellenlänge $\lambda$=500nm erfüllt ist, und
in der optischen Mehrlagenschicht in einem Wellenlängenbereich von größer als oder gleich 280nm und nicht größer als 380nm ein durchschnittlicher Lichtreflexionsgrad größer als oder gleich 69% und nicht größer als 86% ist, und in einem Wellenlängenbereich von größer als oder gleich 380nm und nicht größer als 500nm ein durchschnittlicher Lichtreflexionsgrad größer als oder gleich 17% und nicht größer als 26% ist, sodass sowohl blaues Licht als auch ultraviolette Strahlen abgeschnitten werden können, während eine Sicht gewährleistet werden kann.

**3.** Optisches Produkt gemäß Anspruch 1 oder 2, wobei in der optischen Mehrlagenschicht in einem Wellenlängenbereich von größer als oder gleich 500nm und nicht größer als 700nm ein durchschnittlicher Lichtreflexionsgrad weniger als oder gleich 1% ist.

**4.** Optisches Produkt gemäß einem der Ansprüche 1 bis 3, wobei ein Reflexionsgrad in der optischen Mehrlagenschicht für eine D65 Lichtquelle und einen Beobachtungswinkel von 2 Grad weniger als oder gleich 1,0% ist.

**5.** Brillenlinse, aufweisend:
das optische Produkt gemäß einem der Ansprüche 1 bis 4, wobei die Basis eine Basis einer Brillenlinse ist.

## Revendications

**1.** Produit optique comprenant :

une base ; et
un film multicouche optique formé sur une surface de la base, dans lequel
le film multicouche optique est constitué de six couches (L1 à L6) dans lesquelles une couche à faible indice de réfraction (L2, L4, L6) réalisée en dioxyde de silicium et une couche à indice de réfraction élevé (L1, L3, L5) réalisée en dioxyde de zirconium sont disposées en alternance où une première couche (L1) est la plus proche de la base et une dernière couche (L6) est la couche à faible indice de réfraction,
dans lequel la dernière couche (L6) a une épaisseur de film optique M qui satisfait la condition suivante lorsqu'une longueur d'onde nominale $\lambda$ = 500 nm est satisfaite :

$$0{,}326\lambda \leq M \leq 0{,}379\lambda$$

**caractérisé en ce que**
lorsqu'une couche (L5) adjacente à la dernière couche (L6) a une épaisseur de film optique N, une somme M + N de l'épaisseur de film optique M et de l'épaisseur de film optique N satisfait la condition suivante, lorsqu'une longueur d'onde nominale $\lambda$ = 500 nm est satisfaite :

$$0{,}499\lambda \leq M + N \leq 0{,}556\lambda$$

une somme de l'épaisseur de film optique des quatre premières couches (L1, L2, L3, L4) est dans une plage entre 0,597$\lambda$ et 0,674$\lambda$, lorsqu'une longueur d'onde nominale $\lambda$ = 500 nm est satisfaite, et dans le film multicouche optique, une réflectance moyenne pour une lumière dans une plage de longueurs d'onde qui sont supérieures ou égales à 280 nm et non supérieures à 380 nm, est supérieure ou égale à 50 % et non supérieure à 54 %, et une réflectance moyenne pour une lumière dans une plage de longueurs d'onde qui sont supérieures ou égales à 380 nm et non supérieures à 500 nm, est supérieure ou égale à 15 % et non supérieure à 21 %, de sorte qu'à la fois une lumière bleue et des rayons ultraviolets puissent être coupés tout en garantissant une visibilité.

**2.** Produit optique comprenant :

une base ; et
un film multicouche optique formé sur une surface de la base, dans lequel
le film multicouche optique est constitué de sept couches (L1 à L7) dans lesquelles une couche à faible indice de réfraction (L1, L3, L5, L7) réalisée en dioxyde de silicium et une couche à indice de réfraction élevé (L2, L4, L6) sont disposées en alternance où une première couche est la plus proche de la base et une dernière couche (L7) est la couche à faible indice de réfraction,
**caractérisé en ce que**
les couches à indice de réfraction élevé (L2, L4, L6) sont réalisées en oxyde de titane,
lorsque la dernière couche (L7) a une épaisseur de film optique M et une couche (L6) adjacente à la dernière couche (L7) a une épaisseur de film optique N, les conditions suivantes sont satisfaites, lorsqu'une longueur d'onde nominale λ = 500 nm est satisfaite :

$$0{,}296\lambda \leq M \leq 0{,}415\lambda$$

$$0{,}462\lambda \leq M + N \leq 0{,}559\lambda$$

une somme de l'épaisseur de film optique des cinq premières couches (L1, L2, L3, L4, L5) est dans une plage entre 0,581λ et 0,772λ, lorsqu'une longueur d'onde nominale λ = 500 nm est satisfaite, et
dans le film multicouche optique, une réflectance moyenne pour une lumière dans une plage de longueurs d'onde qui sont supérieures ou égales à 280 nm et non supérieures à 380 nm, est supérieure ou égale à 69 % et non supérieure à 86 %, et une réflectance moyenne pour une lumière dans une plage de longueurs d'onde qui sont supérieures ou égales à 380 nm et non supérieures à 500 nm, est supérieure ou égale à 17 % et non supérieure à 26 %, de sorte qu'à la fois une lumière bleue et des rayons ultraviolets puissent être coupés tout en garantissant une visibilité.

**3.** Produit optique selon la revendication 1 ou 2, dans lequel, dans le film multicouche optique, une réflectance moyenne pour une lumière dans une plage de longueurs d'onde qui sont supérieures ou égales à 500 nm et non supérieures à 700 nm, est inférieure ou égale à 1,0 %.

**4.** Produit optique selon l'une quelconque des revendications 1 à 3, dans lequel
une réflectance lumineuse dans le film multicouche optique est inférieure ou égale à 1,0 %, pour une source de lumière D65 et un angle de vision de 2 degrés.

**5.** Verre de lunettes comprenant :

le produit optique selon l'une quelconque des revendications 1 à 4, dans lequel
la base est une base de verre de lunettes.

[FIG.1]

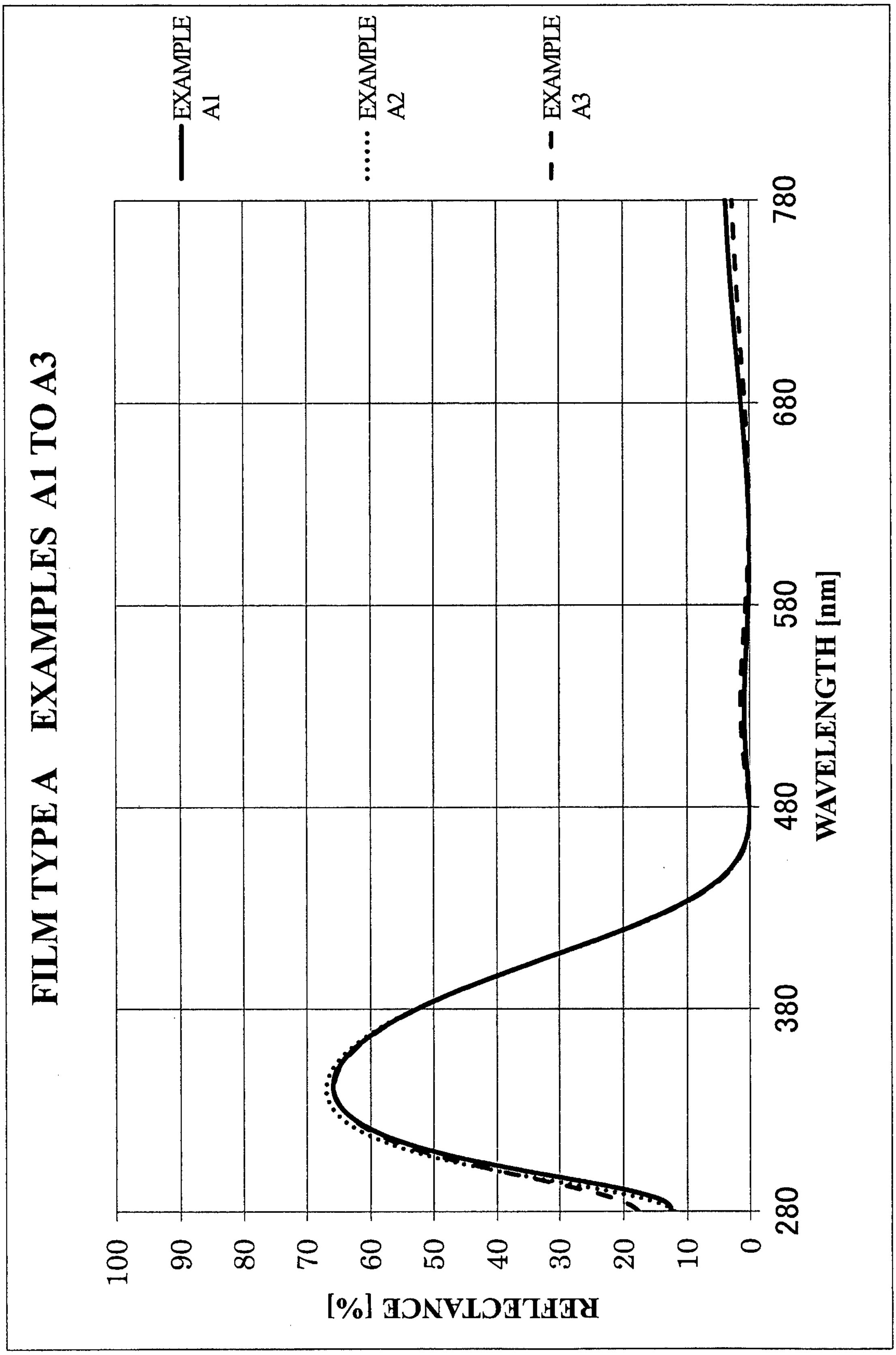
FILM TYPE A EXAMPLES A1 TO A3
REFLECTANCE [%]
100
90
80
70
60
50
40
30
20
10
0
280
380
480
580
680
780
WAVELENGTH [nm]
EXAMPLE A1
EXAMPLE A2
EXAMPLE A3

[FIG.2]

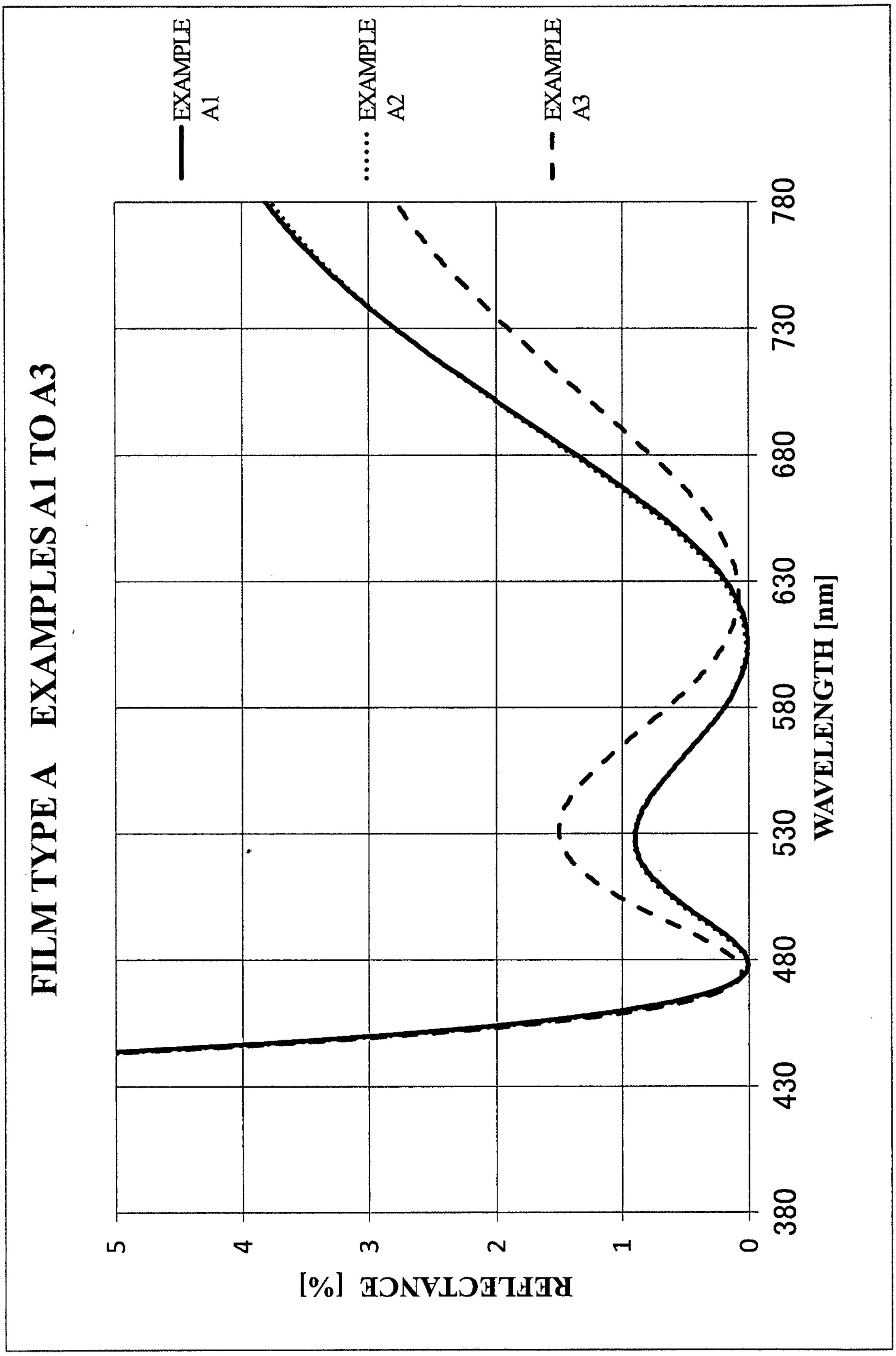
FILM TYPE A EXAMPLES A1 TO A3
REFLECTANCE [%]
0
1
2
3
4
5
WAVELENGTH [nm]
380
430
480
530
580
630
680
730
780
EXAMPLE A1
EXAMPLE A2
EXAMPLE A3

[FIG.3]

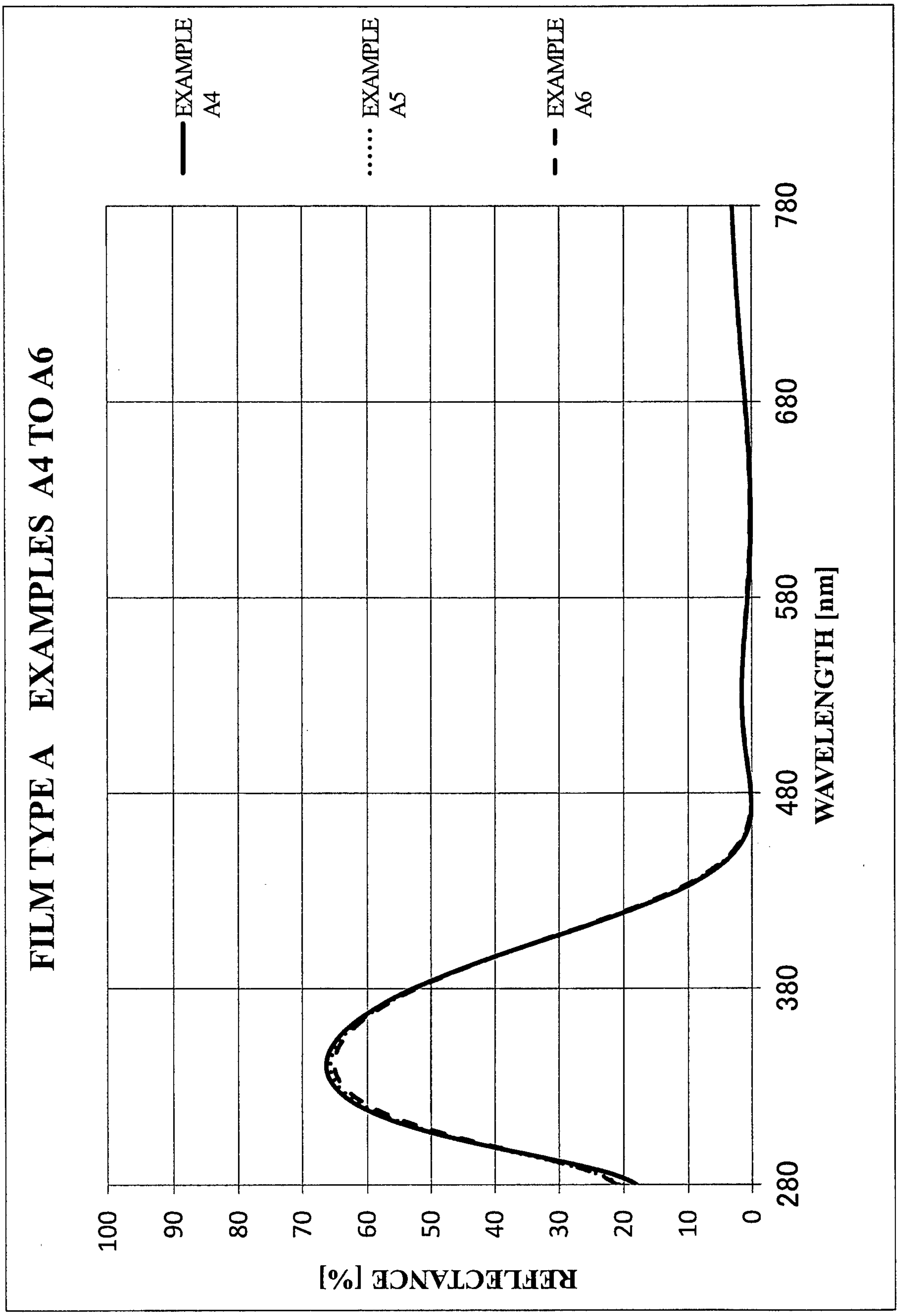
FILM TYPE A EXAMPLES A4 TO A6
REFLECTANCE [%]
100
90
80
70
60
50
40
30
20
10
0
280
380
480
580
680
780
WAVELENGTH [nm]
EXAMPLE A4
EXAMPLE A5
EXAMPLE A6

[FIG.4]

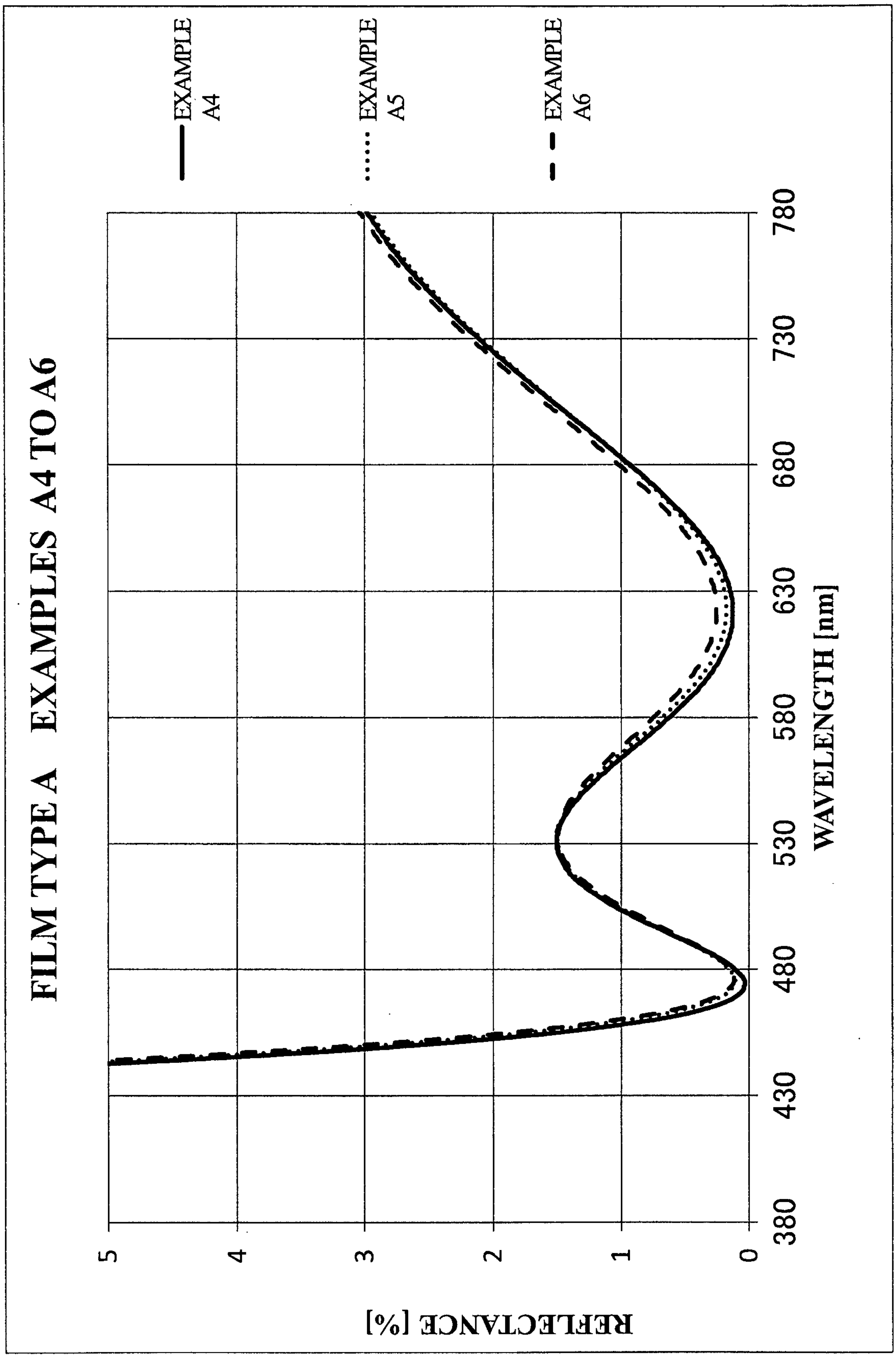
FILM TYPE A EXAMPLES A4 TO A6
EXAMPLE A4
EXAMPLE A5
EXAMPLE A6
REFLECTANCE [%]
WAVELENGTH [nm]
0
1
2
3
4
5
380
430
480
530
580
630
680
730
780

[FIG.5]

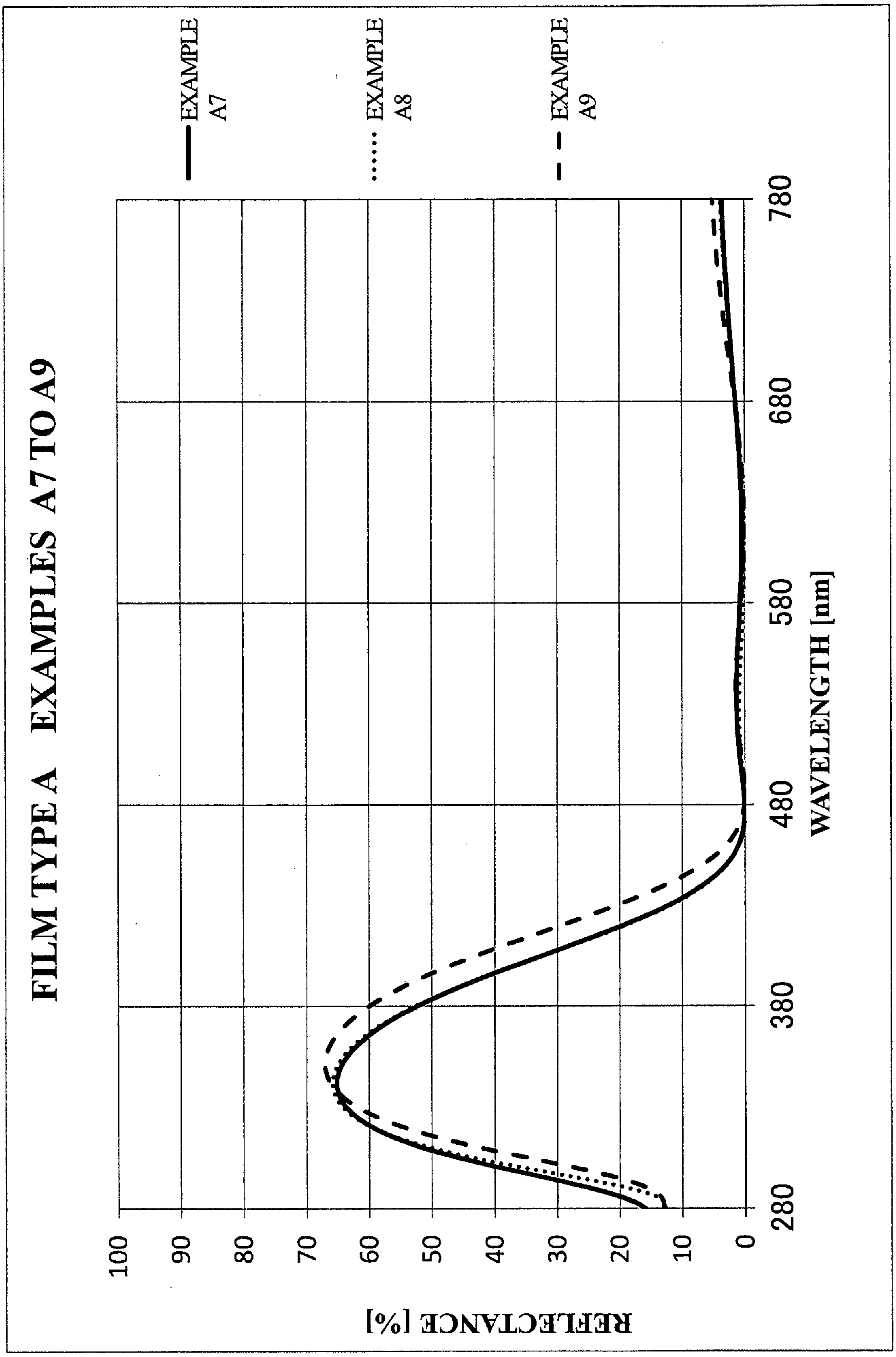
FILM TYPE A EXAMPLES A7 TO A9
EXAMPLE A7
EXAMPLE A8
EXAMPLE A9
REFLECTANCE [%]
100
90
80
70
60
50
40
30
20
10
0
280
380
480
580
680
780
WAVELENGTH [nm]

[FIG.6]

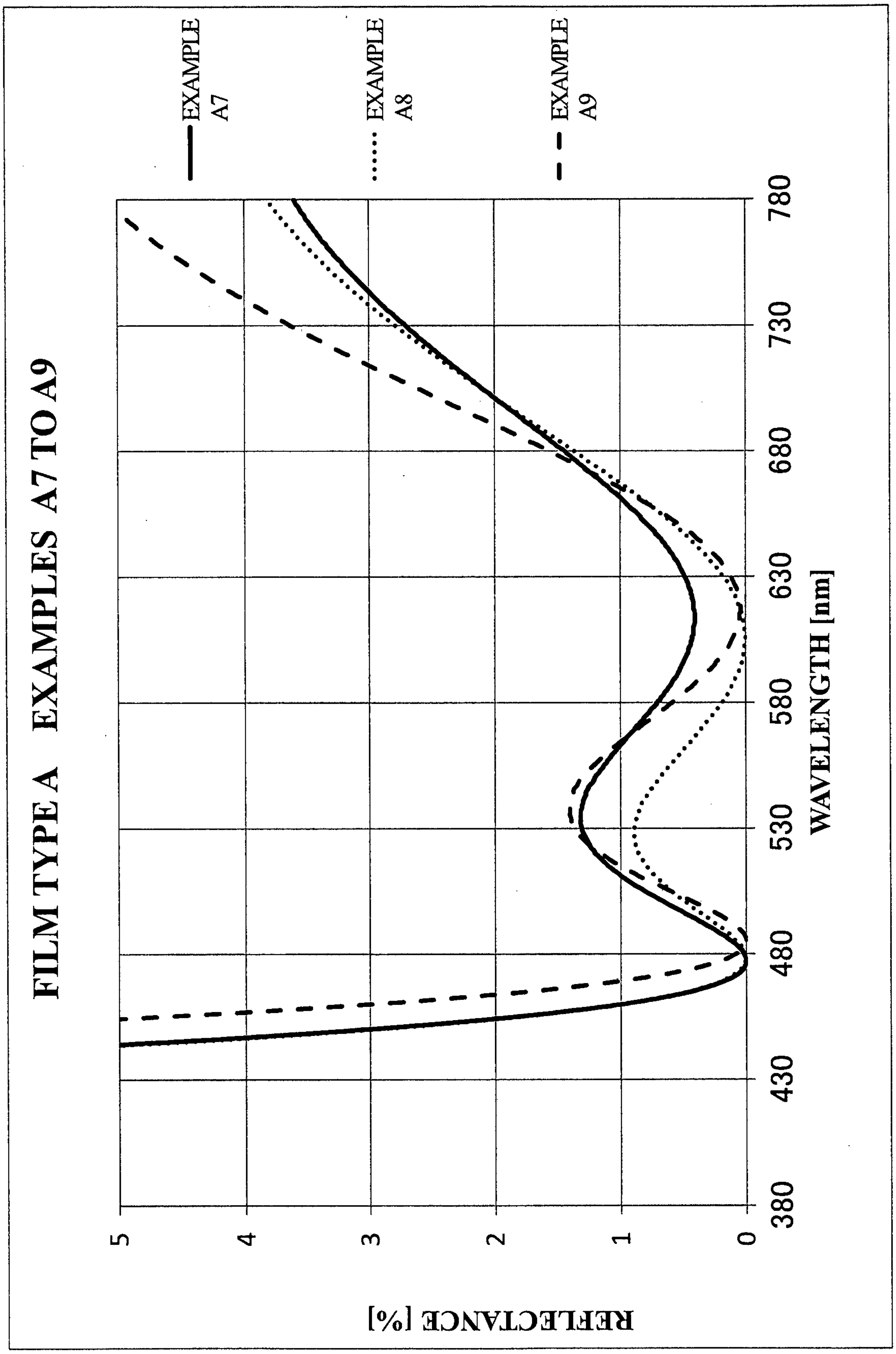
FILM TYPE A EXAMPLES A7 TO A9
EXAMPLE A7
EXAMPLE A8
EXAMPLE A9
REFLECTANCE [%]
0
1
2
3
4
5
WAVELENGTH [nm]
380
430
480
530
580
630
680
730
780

[FIG.7]

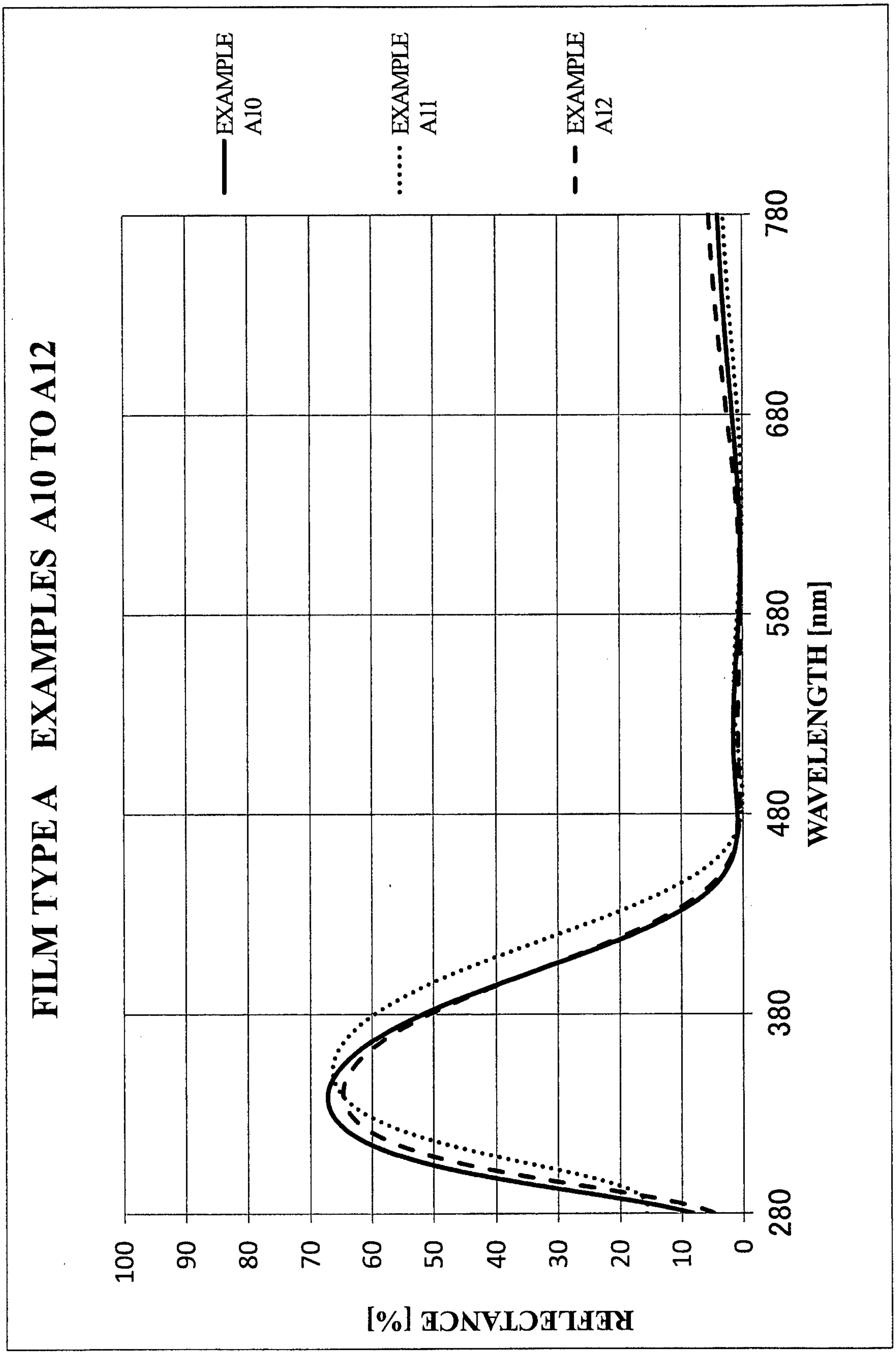
FILM TYPE A EXAMPLES A10 TO A12
EXAMPLE A10
EXAMPLE A11
EXAMPLE A12
REFLECTANCE [%]
100
90
80
70
60
50
40
30
20
10
0
280
380
480
580
680
780
WAVELENGTH [nm]

[FIG.8]

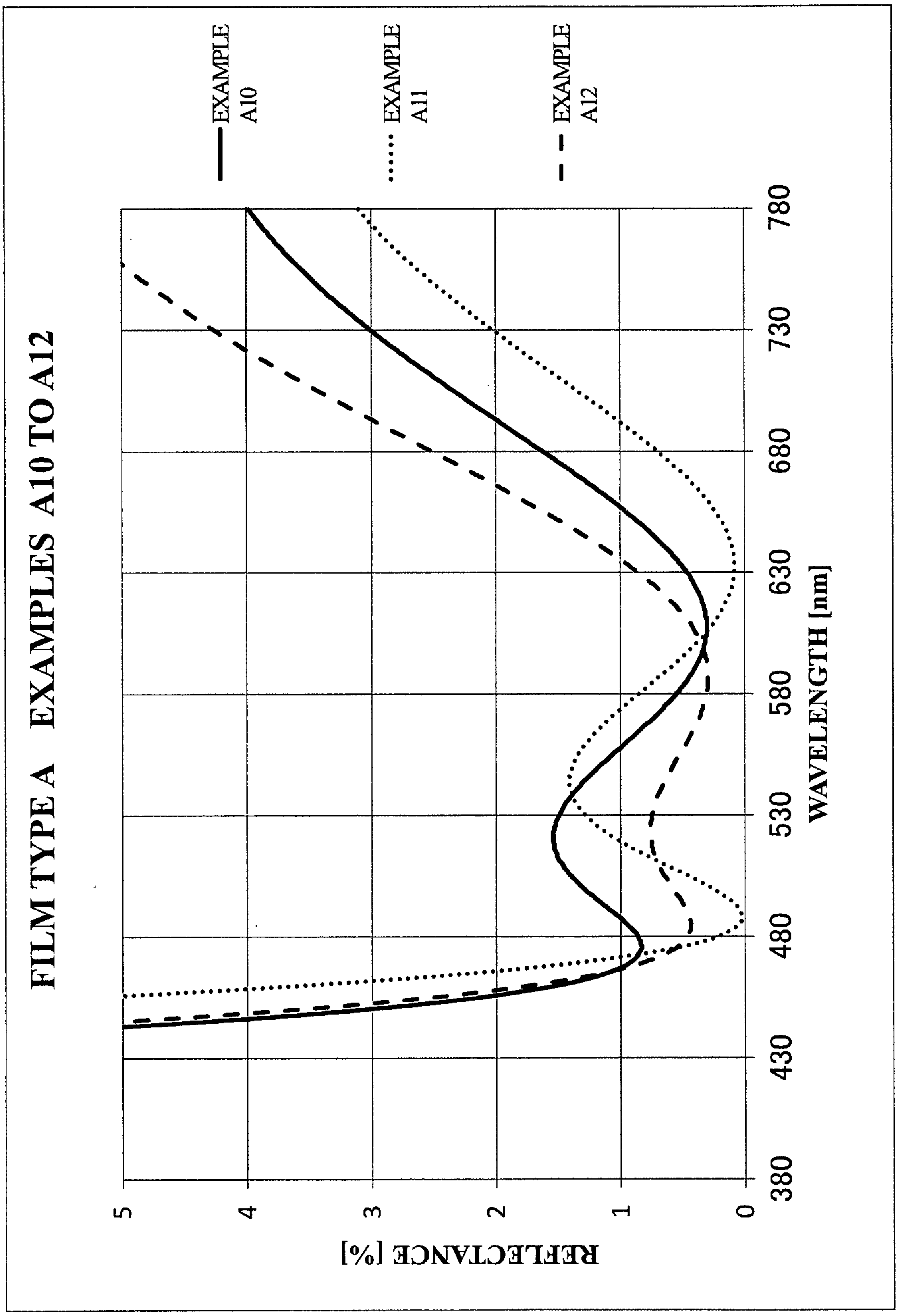
FILM TYPE A EXAMPLES A10 TO A12
EXAMPLE A10
EXAMPLE A11
EXAMPLE A12
REFLECTANCE [%]
0
1
2
3
4
5
WAVELENGTH [nm]
380
430
480
530
580
630
680
730
780

[FIG.9]

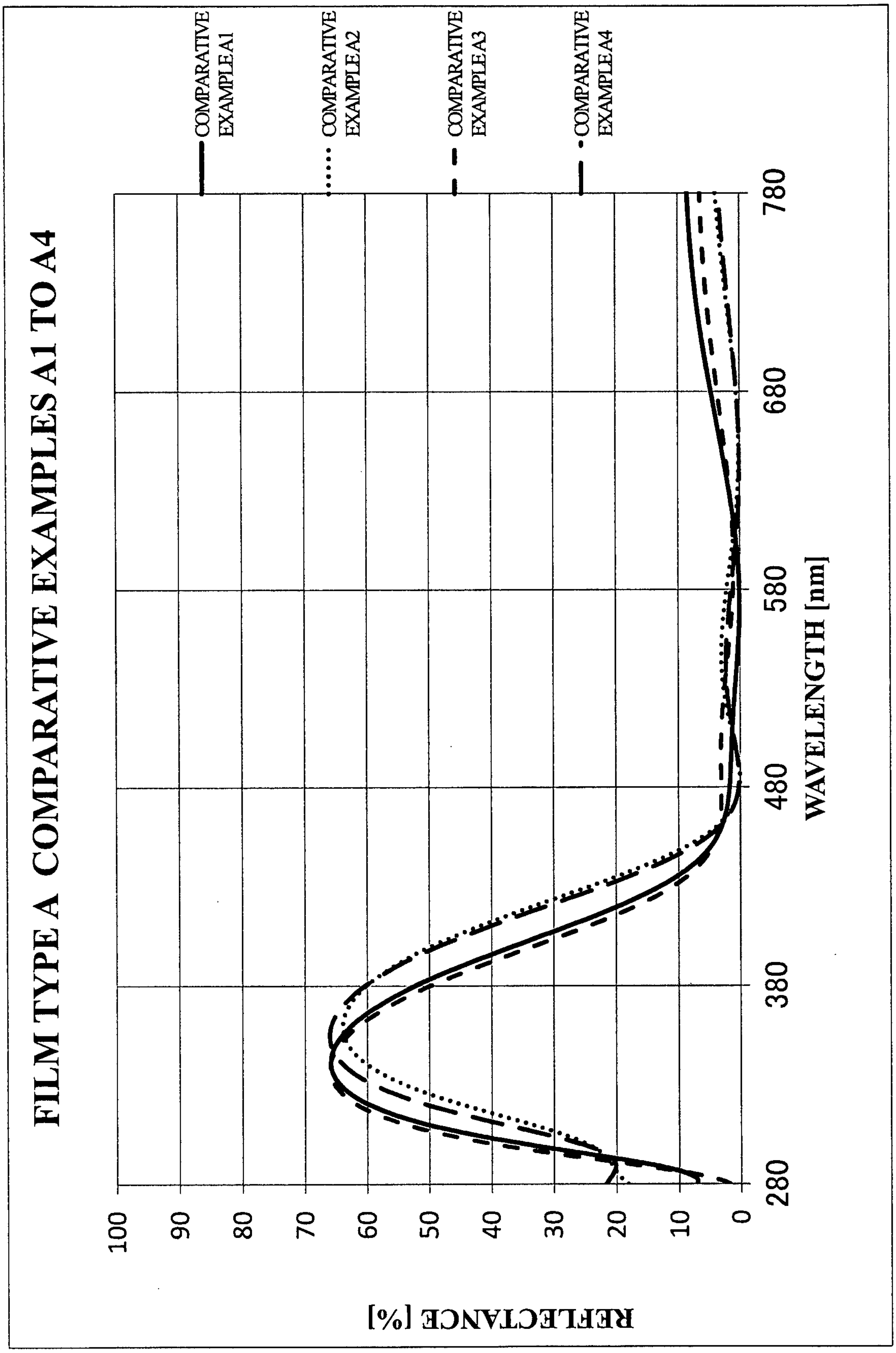
FILM TYPE A COMPARATIVE EXAMPLES A1 TO A4
REFLECTANCE [%]
WAVELENGTH [nm]
100
90
80
70
60
50
40
30
20
10
0
280
380
480
580
680
780
COMPARATIVE EXAMPLE A1
COMPARATIVE EXAMPLE A2
COMPARATIVE EXAMPLE A3
COMPARATIVE EXAMPLE A4

[FIG.10]

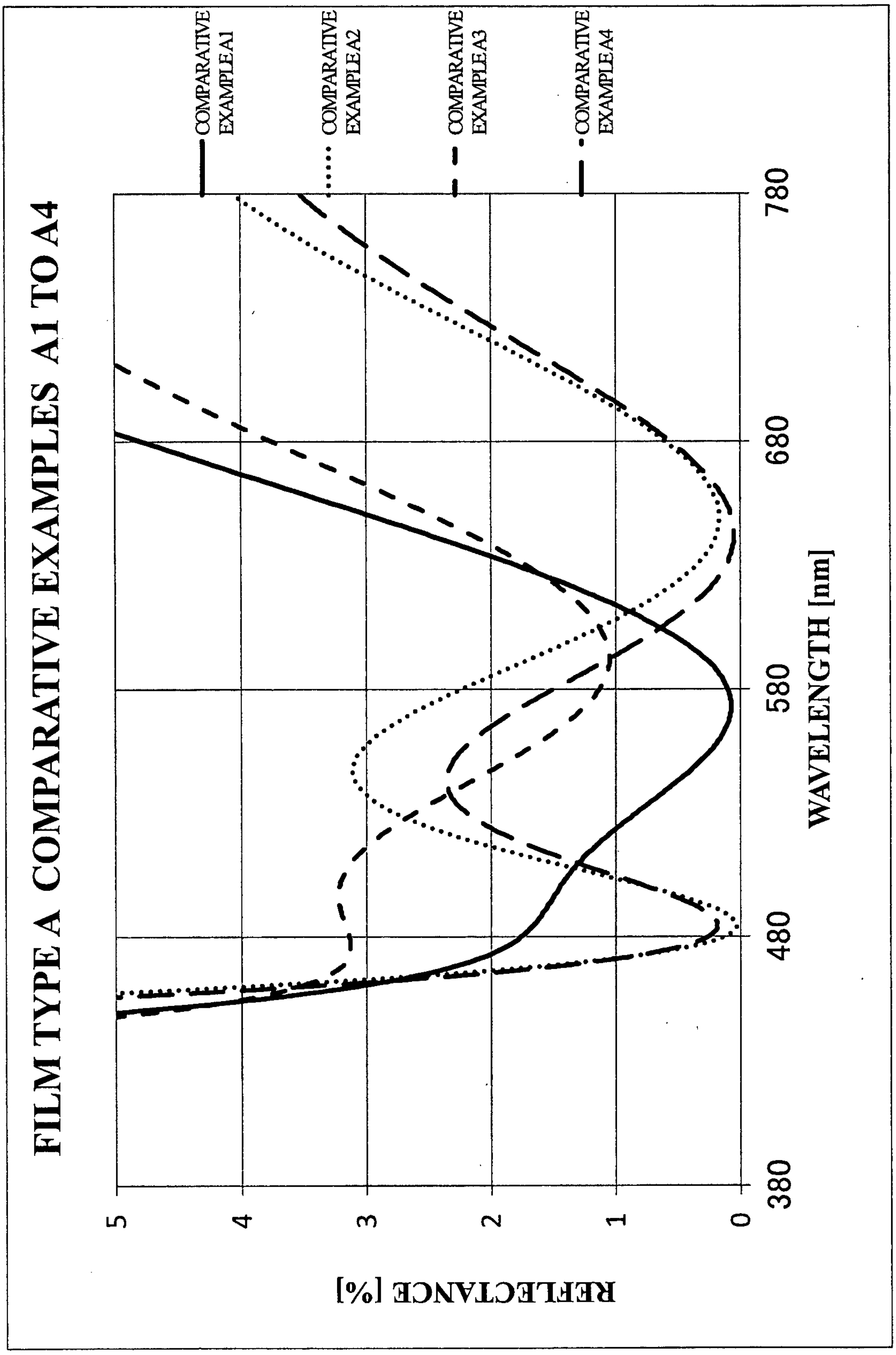
FILM TYPE A COMPARATIVE EXAMPLES A1 TO A4
REFLECTANCE [%]
WAVELENGTH [nm]
0
1
2
3
4
5
380
480
580
680
780
COMPARATIVE EXAMPLE A1
COMPARATIVE EXAMPLE A2
COMPARATIVE EXAMPLE A3
COMPARATIVE EXAMPLE A4

[FIG.11]

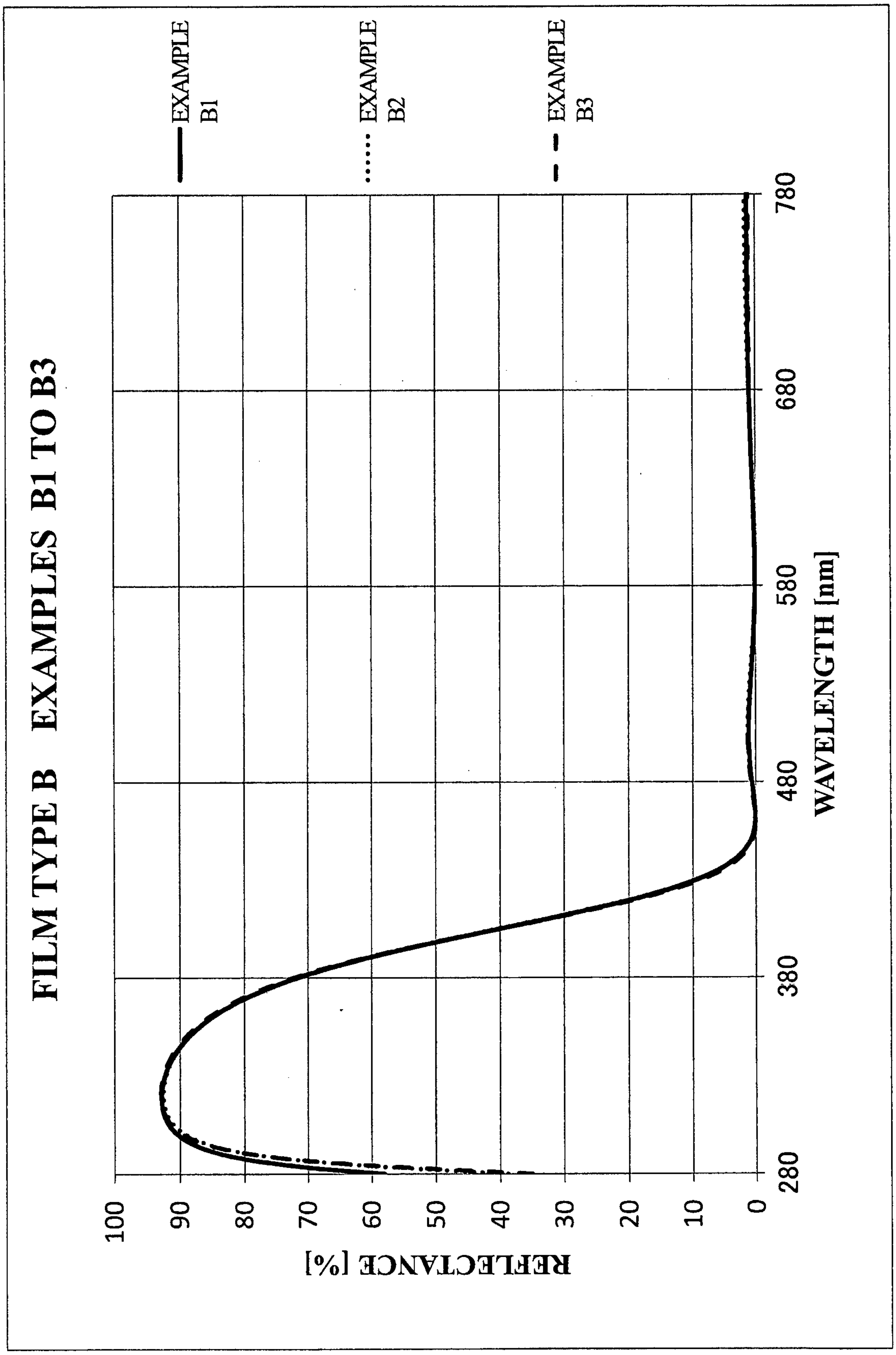
FILM TYPE B EXAMPLES B1 TO B3
REFLECTANCE [%]
100
90
80
70
60
50
40
30
20
10
0
280
380
480
580
680
780
WAVELENGTH [nm]
EXAMPLE B1
EXAMPLE B2
EXAMPLE B3

[FIG.12]

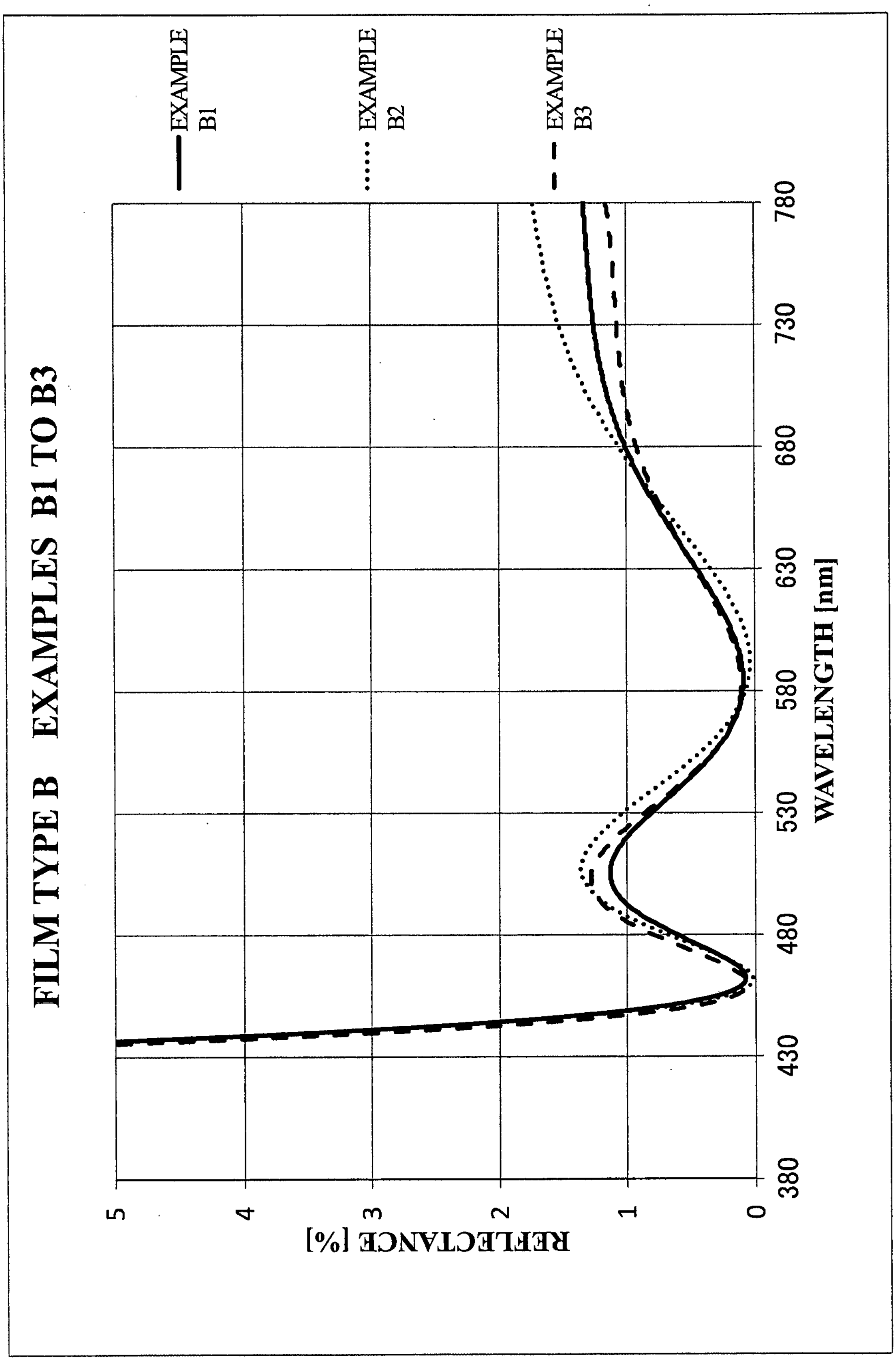
FILM TYPE B EXAMPLES B1 TO B3
EXAMPLE B1
EXAMPLE B2
EXAMPLE B3
REFLECTANCE [%]
0
1
2
3
4
5
WAVELENGTH [nm]
380
430
480
530
580
630
680
730
780

[FIG.13]

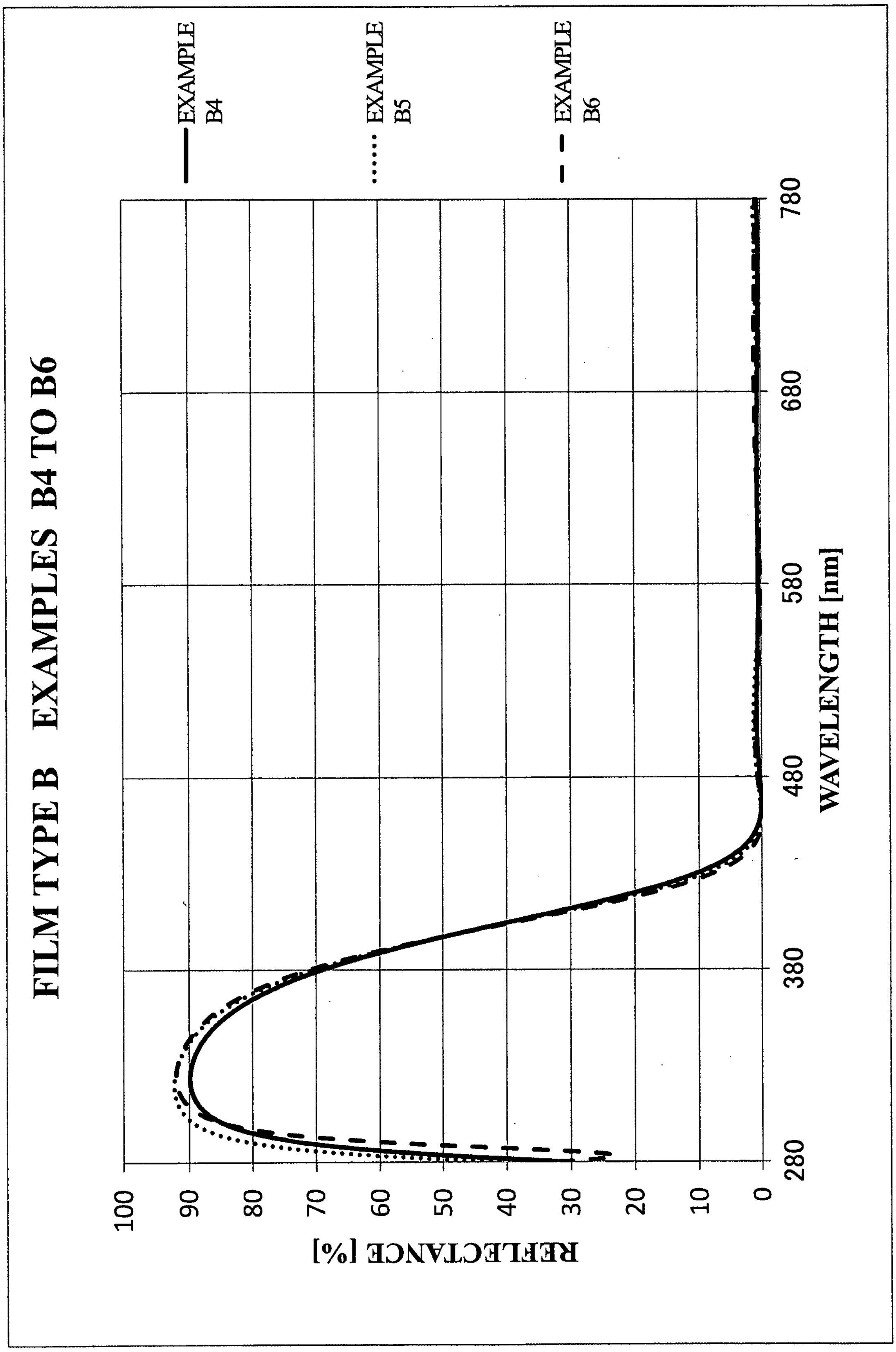
FILM TYPE B EXAMPLES B4 TO B6
REFLECTANCE [%]
100
90
80
70
60
50
40
30
20
10
0
280
380
480
580
680
780
WAVELENGTH [nm]
EXAMPLE B4
EXAMPLE B5
EXAMPLE B6

[FIG.14]

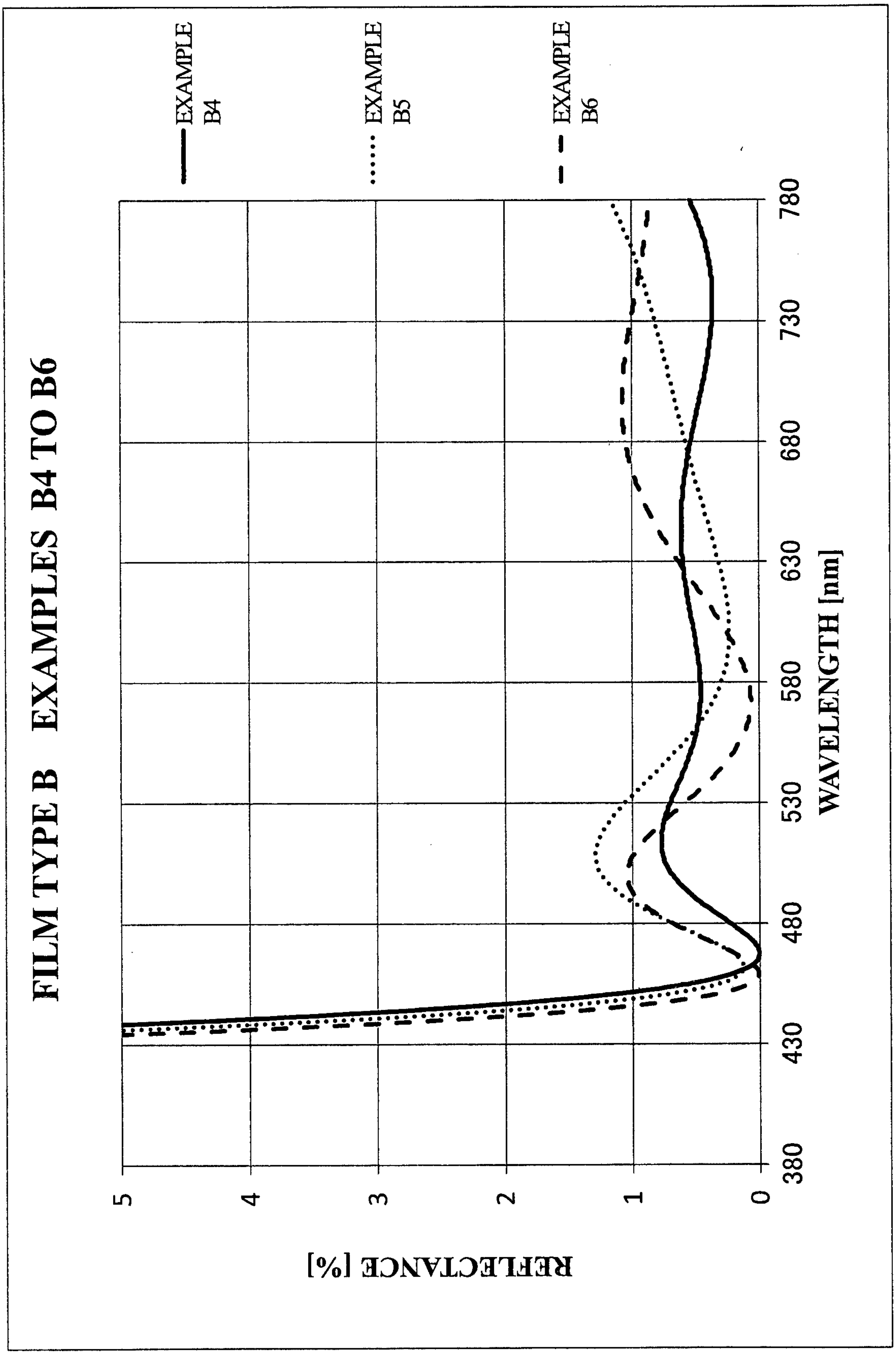
FILM TYPE B EXAMPLES B4 TO B6
EXAMPLE B4
EXAMPLE B5
EXAMPLE B6
REFLECTANCE [%]
0
1
2
3
4
5
WAVELENGTH [nm]
380
430
480
530
580
630
680
730
780

[FIG.15]

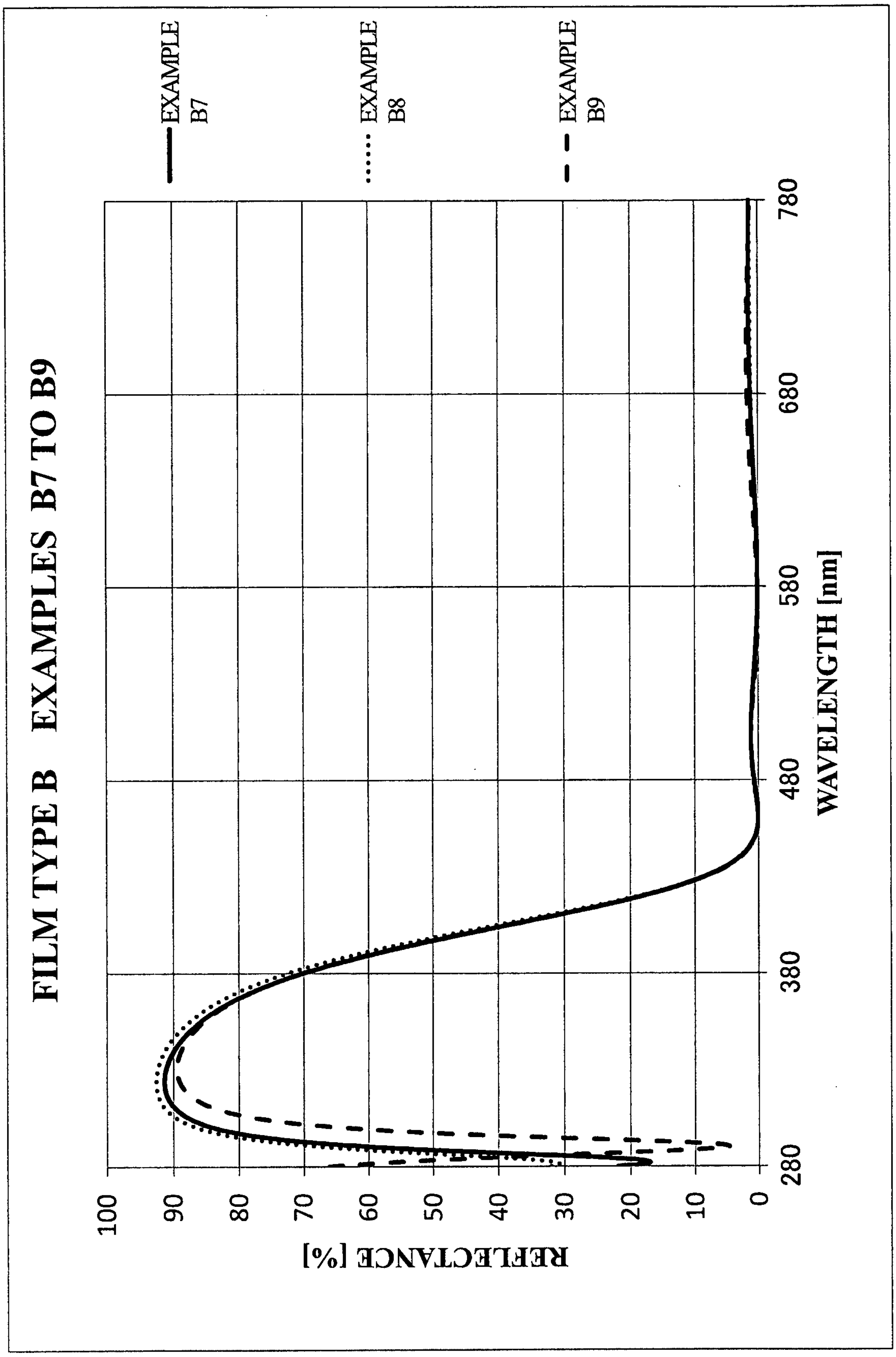
FILM TYPE B EXAMPLES B7 TO B9
EXAMPLE B7
EXAMPLE B8
EXAMPLE B9
REFLECTANCE [%]
100
90
80
70
60
50
40
30
20
10
0
280
380
480
580
680
780
WAVELENGTH [nm]

[FIG.16]

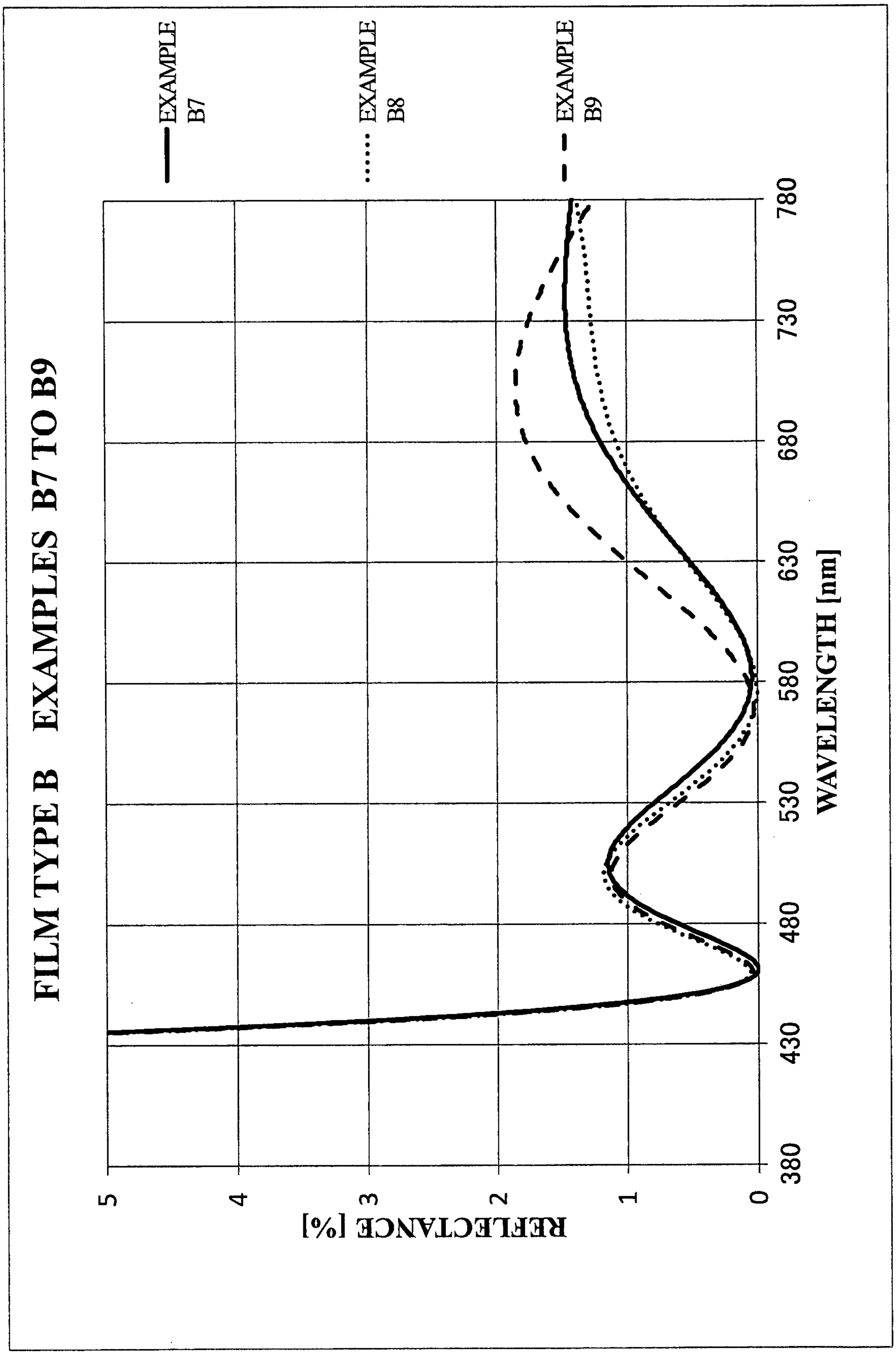
FILM TYPE B EXAMPLES B7 TO B9
EXAMPLE B7
EXAMPLE B8
EXAMPLE B9
REFLECTANCE [%]
0
1
2
3
4
5
WAVELENGTH [nm]
380
430
480
530
580
630
680
730
780

[FIG.17]

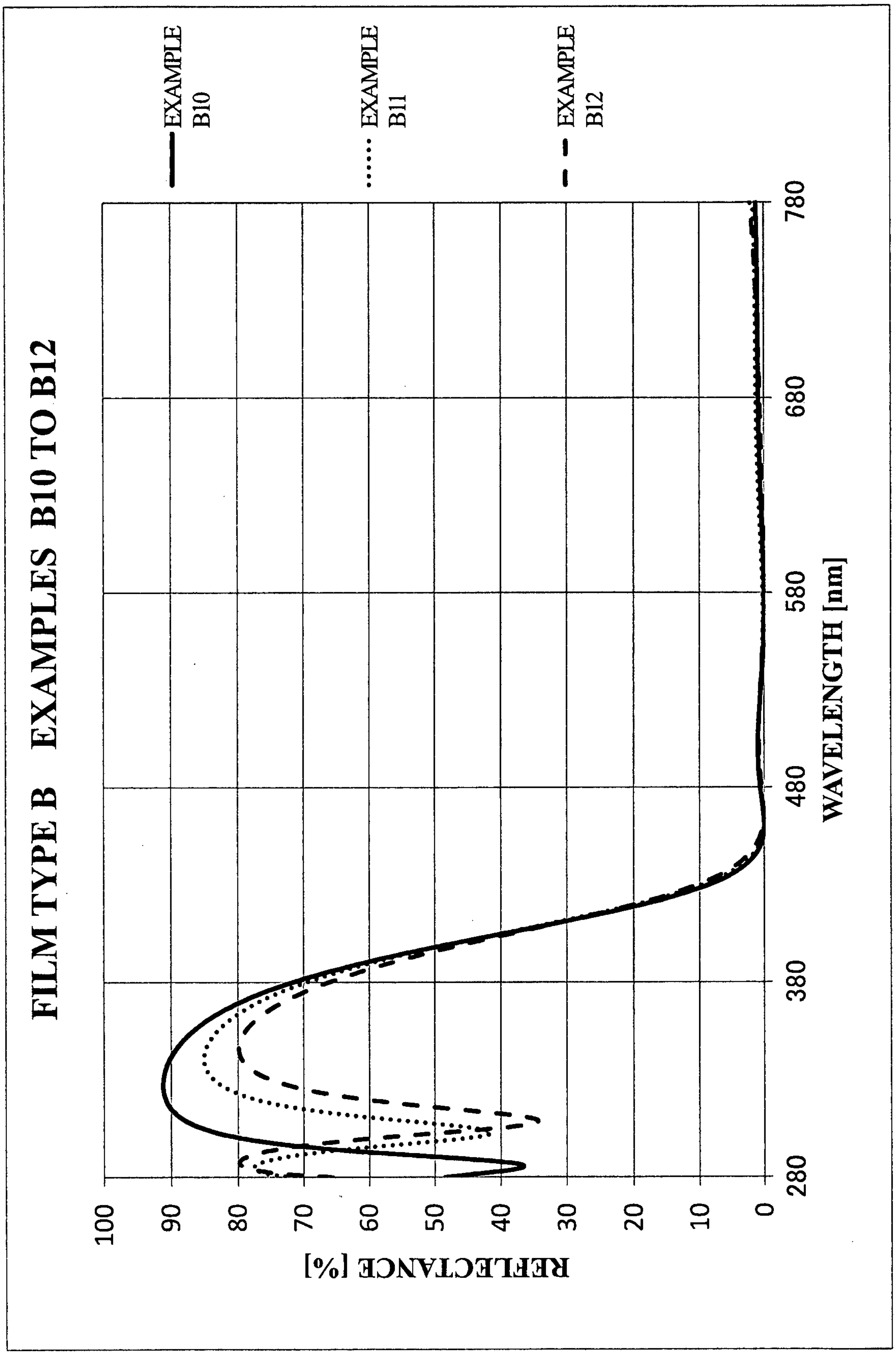
FILM TYPE B EXAMPLES B10 TO B12
REFLECTANCE [%]
100
90
80
70
60
50
40
30
20
10
0
280
380
480
580
680
780
WAVELENGTH [nm]
EXAMPLE B10
EXAMPLE B11
EXAMPLE B12

[FIG.18]

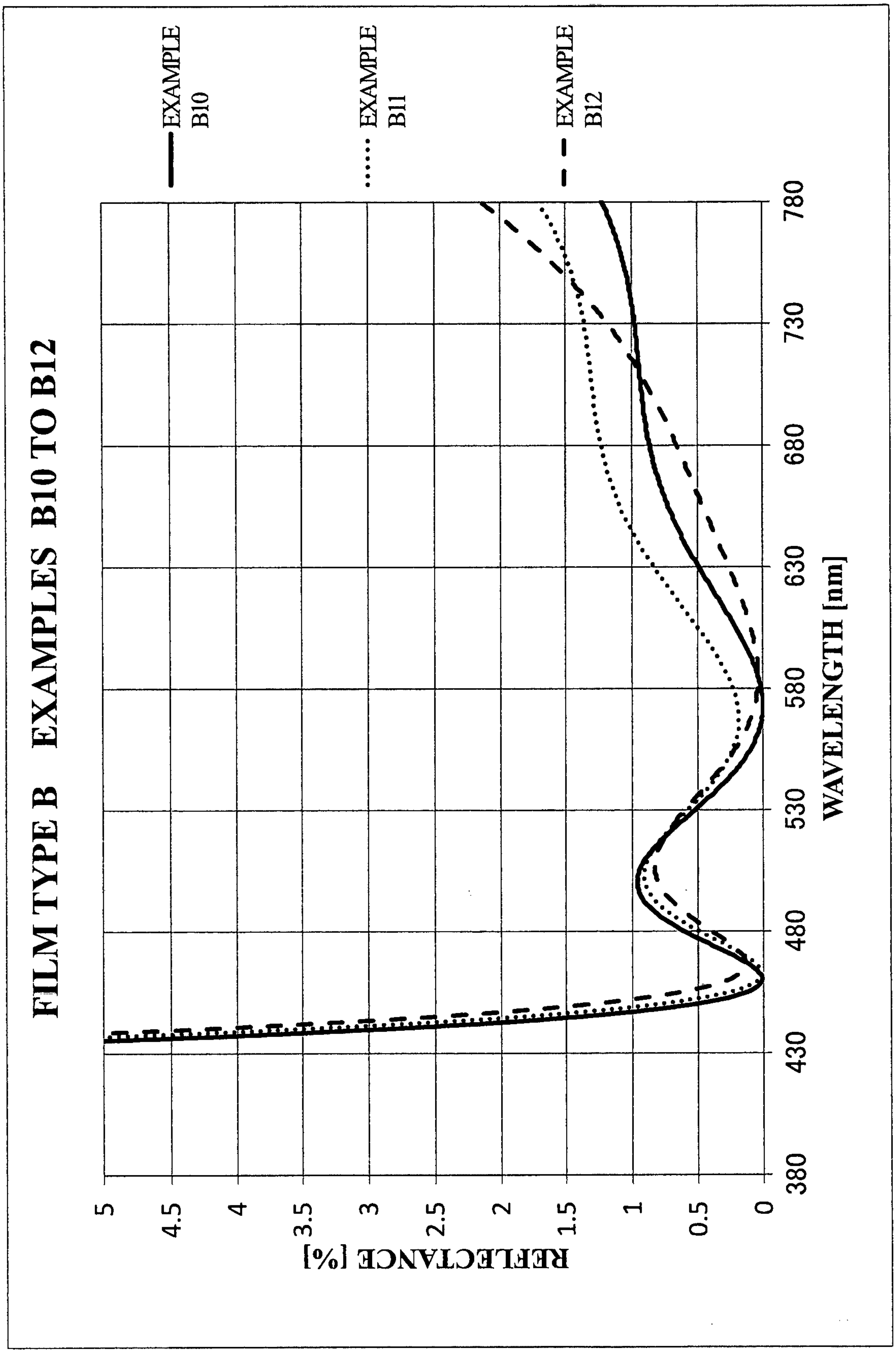
FILM TYPE B EXAMPLES B10 TO B12
EXAMPLE B10
EXAMPLE B11
EXAMPLE B12
REFLECTANCE [%]
0
0.5
1
1.5
2
2.5
3
3.5
4
4.5
5
WAVELENGTH [nm]
380
430
480
530
580
630
680
730
780

[FIG.19]

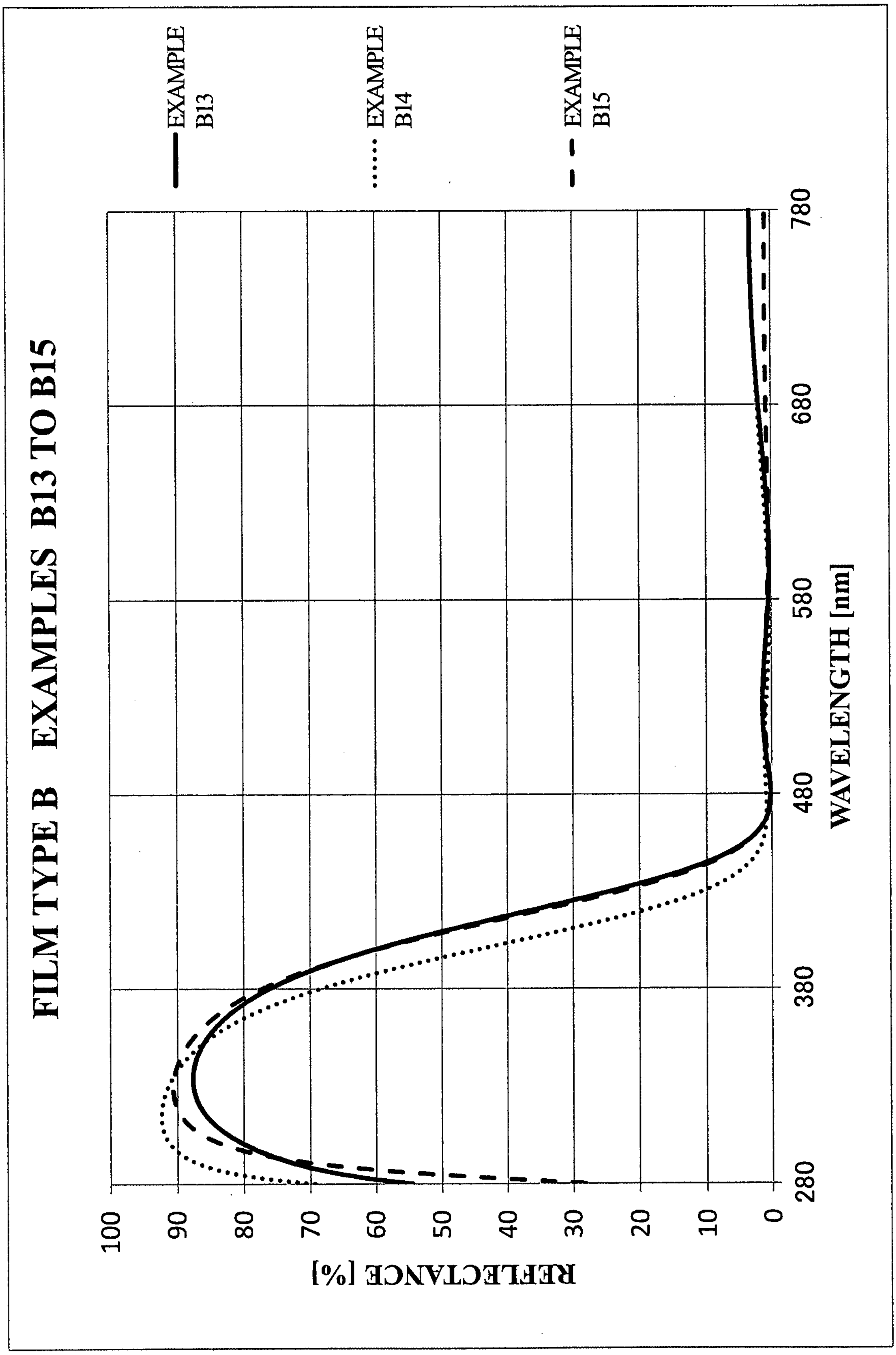
FILM TYPE B EXAMPLES B13 TO B15
EXAMPLE B13
EXAMPLE B14
EXAMPLE B15
REFLECTANCE [%]
100
90
80
70
60
50
40
30
20
10
0
280
380
480
580
680
780
WAVELENGTH [nm]

[FIG.20]

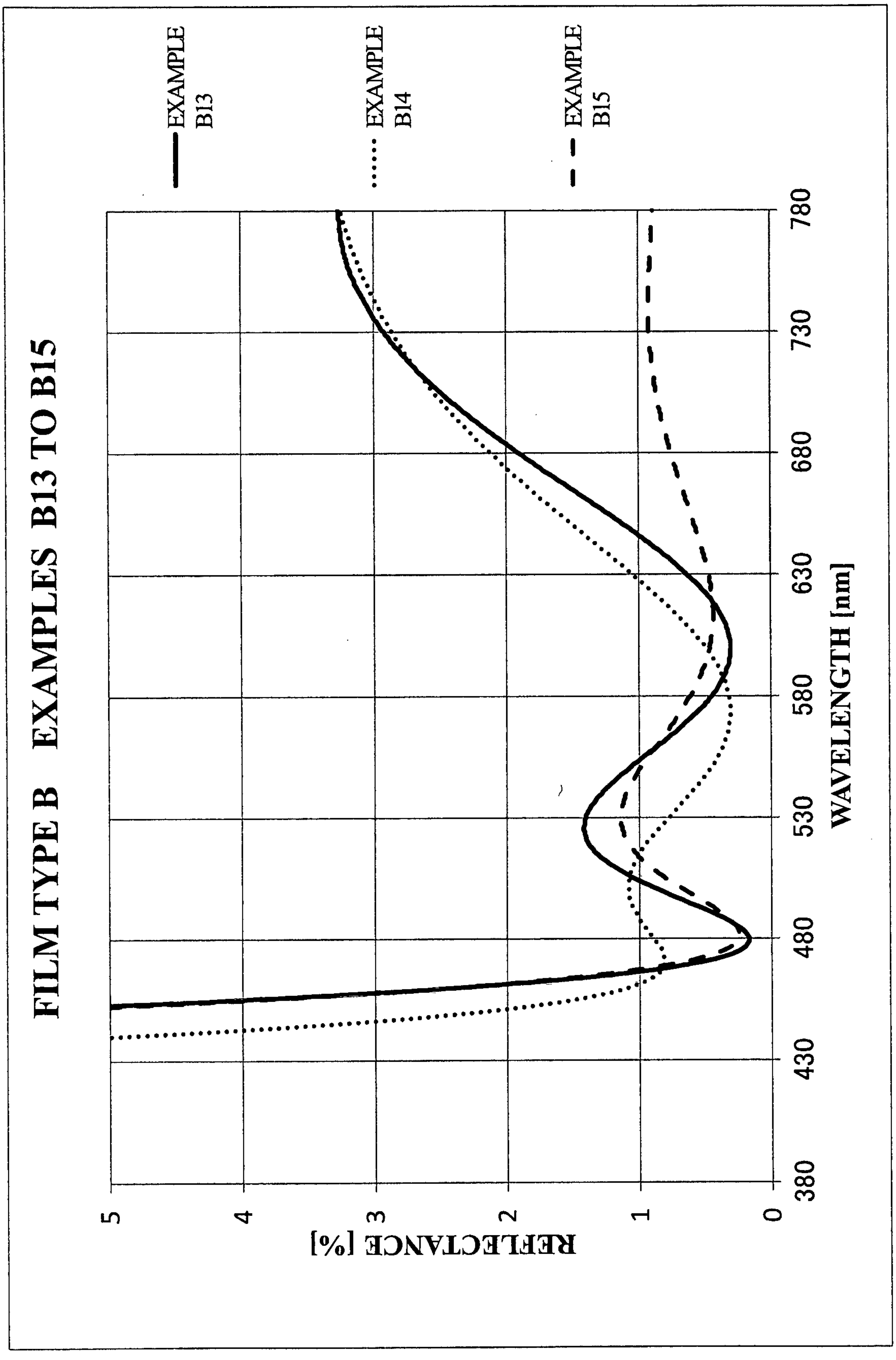
FILM TYPE B EXAMPLES B13 TO B15
REFLECTANCE [%]
0
1
2
3
4
5
WAVELENGTH [nm]
380
430
480
530
580
630
680
730
780
EXAMPLE B13
EXAMPLE B14
EXAMPLE B15

[FIG.21]

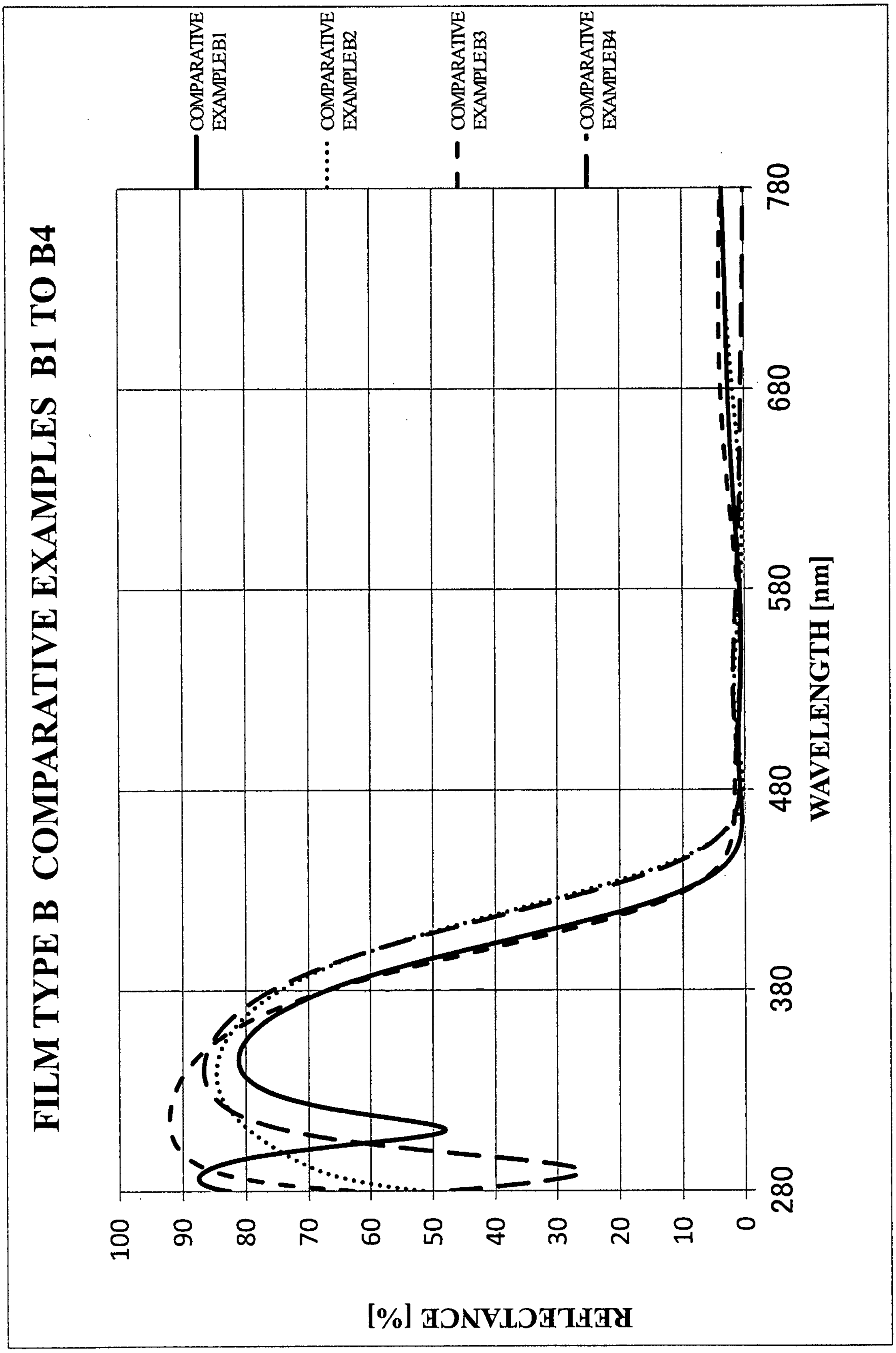
FILM TYPE B COMPARATIVE EXAMPLES B1 TO B4
COMPARATIVE EXAMPLE B1
COMPARATIVE EXAMPLE B2
COMPARATIVE EXAMPLE B3
COMPARATIVE EXAMPLE B4
REFLECTANCE [%]
100
90
80
70
60
50
40
30
20
10
0
280
380
480
580
680
780
WAVELENGTH [nm]

[FIG.22]

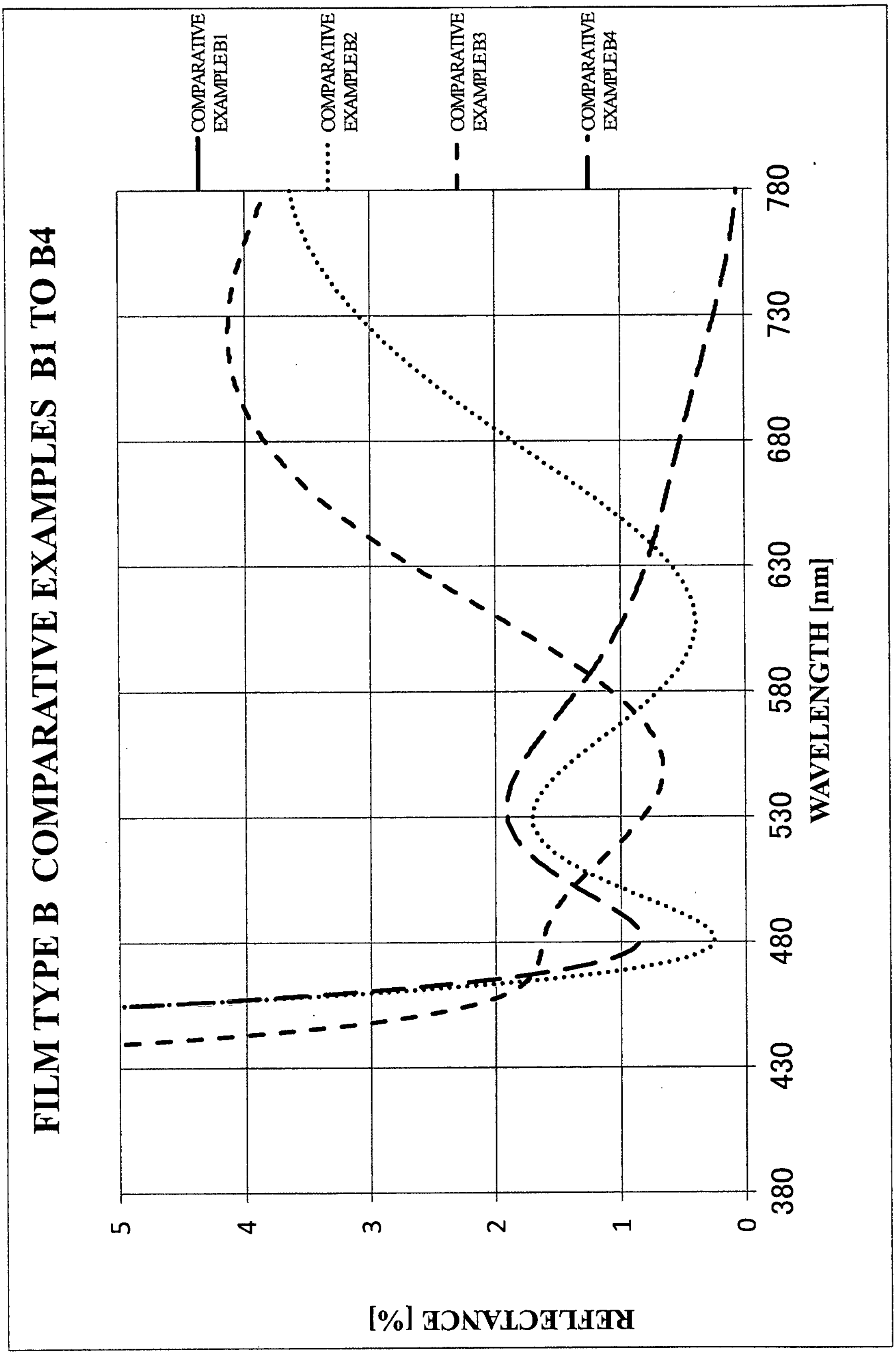
FILM TYPE B COMPARATIVE EXAMPLES B1 TO B4
COMPARATIVE EXAMPLE B1
COMPARATIVE EXAMPLE B2
COMPARATIVE EXAMPLE B3
COMPARATIVE EXAMPLE B4
REFLECTANCE [%]
0
1
2
3
4
5
WAVELENGTH [nm]
380
430
480
530
580
630
680
730
780

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4171362 B
- JP 5173076 B
- EP 2624044 A1
- EP 2275843 A1
- WO 9108106 A1
- EP 1777554 A1